# EUROPÄISCHE PATENTSCHRIFT

(11) **EP 3 580 797 B1**
(45) Veröffentlichungstag und Bekanntmachung des Hinweises auf die Patenterteilung: **18.05.2022**
(21) Anmeldenummer: 17704439.3
(22) Anmeldetag: 07.02.2017
(51) Int. Cl.: H01M 4/134, H01M 4/1395, H01M 4/38, H01M 4/62, H01M 10/0525, H01M 4/36, H01M 4/02, H01M 10/42

(54) **KERN-SCHALE-KOMPOSITPARTIKEL FÜR ANODENMATERIALIEN VON LITHIUM-IONEN-BATTERIEN**
CORE-SHELL COMPOSITE PARTICLE FOR ANODE MATERIALS OF LITHIUM-ION BATTERIES
PARTICULES À COEUR/COQUILLE POUR MATÉRIAU D'ANODE D'UNE BATTERIE LITHIUM-ION

(43) Veröffentlichungstag der Anmeldung: 18.12.2019
(73) Patentinhaber: Wacker Chemie AG, 81737 München (DE)
(72) Erfinder: GIGLER, Peter, 85221 Dachau (DE); BERNHARD, Rebecca, 81373 München (DE); STOHRER, Jürgen, 82049 Pullach (DE)
(74) Vertreter: Ege, Markus
(86) Internationale Anmeldenummer: PCT/EP2017/052657
(87) Internationale Veröffentlichungsnummer: WO 2018/145733

(56) Entgegenhaltungen:
- EP-A2- 1 205 989
- WO-A1-2005/031898
- US-A1- 2005 214 646
- US-A1- 2008 241 647
- US-A1- 2017 018 761
- DATABASE WPI Week 200877 13. November 2008 (2008-11-13) Thomson Scientific, London, GB; AN 2008-N13212 XP002769007, -& JP 2008 277232 A (HITACHI CHEM CO LTD) 13. November 2008 (2008-11-13)

## Beschreibung

Die Erfindung betrifft Kern-Schale-Kompositpartikel, wobei der Kern Siliciumpartikel und Kohlenstoff enthält und die Schale auf Kohlenstoff basiert, sowie Verfahren zur Herstellung der Kern-Schale-Kompositpartikel und deren Einsatz in Anodenmaterialien für Lithium-Ionen-Batterien.

Als Speichermedien für elektrischen Strom sind Lithium-Ionen-Batterien gegenwärtig die praxistauglichen elektrochemischen Energiespeicher mit den höchsten Energiedichten. Lithium-Ionen-Batterien werden vor allem im Bereich der tragbaren Elektronik, für Werkzeuge und auch für elektrisch angetriebene Transportmittel, wie Fahrräder oder Automobile, genutzt. Als Material für die negative Elektrode ("Anode") entsprechender Batterien ist gegenwärtig graphitischer Kohlenstoff weit verbreitet. Nachteilig ist jedoch seine relativ niedrige elektrochemische Kapazität von theoretisch höchstens 372 mAh pro Gramm Graphit, die nur etwa einem Zehntel der mit Lithiummetall theoretisch erreichbaren elektrochemischen Kapazität entspricht. Die Entwicklung alternativer Anodenmaterialien führte zu einem Zusatz von Silicium. Silicium bildet mit Lithium binäre elektrochemisch aktive Legierungen, die sehr hohe Lithiumgehalte und beispielsweise für Li_{4.4}Si theoretische spezifische Kapazitäten im Bereich von 4200 mAh pro Gramm Silicium erreichen können.

Nachteiligerweise ist die Ein- und Auslagerung von Lithium in Silicium mit einer sehr starken Volumenänderung verbunden, die etwa 300% erreichen kann. Derartige Volumenänderungen setzen die Kristallite einer starken mechanischen Belastung aus, auf Grund derer die Kristallite schließlich auseinander brechen können. Dieser auch als elektrochemische Mahlung bezeichnete Prozess führt im Aktivmaterial und in der Elektrodenstruktur zu einem Verlust der elektrischen Kontaktierung und damit zur Zerstörung der Elektrode unter Kapazitätsverlust.

Weiterhin reagiert die Oberfläche des Silicium-Anodenmaterials mit Bestandteilen des Elektrolyten unter kontinuierlicher Bildung passivierender Schutzschichten (Solid Electrolyte Interface; SEI). Die gebildeten Komponenten sind nicht mehr elektrochemisch aktiv. Das darin gebundene Lithium steht dem System nicht mehr zur Verfügung, was zu einem ausgeprägten kontinuierlichen Kapazitätsverlust der Batterie führt. Auf Grund der extremen Volumenänderung des Siliciums während des Lade- bzw. Entladevorgangs der Batterie platzt die SEI regelmäßig auf, wodurch weitere Oberflächen des Silicium-Anodenmaterials freigelegt werden, die dann einer weiteren SEI-Bildung ausgesetzt sind. Da in der Vollzelle die Menge an mobilem Lithium, welches der nutzbaren Kapazität entspricht, durch das Kathodenmaterial begrenzt ist, ist dieses schnell verbraucht und die Kapazität der Zelle sinkt bereits nach wenigen Zyklen in anwendungstechnisch nicht hinnehmbarem Ausmaß.

Die Abnahme der Kapazität im Laufe mehrerer Lade- und Entladezyklen wird auch als Fading oder kontinuierlicher Kapazitätsverlust bezeichnet und ist in der Regel irreversibel.

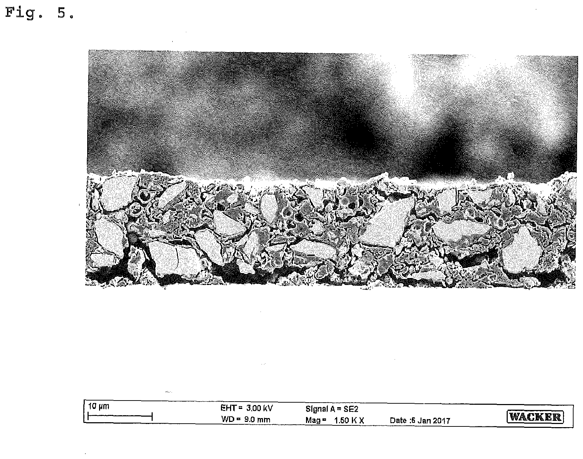

Als Anodenaktivmaterialien für Lithium-Ionen-Batterien sind eine Reihe von Silicium-Kohlenstoff-Kompositpartikel beschrieben worden, in denen die Siliciumpartikel in Kohlenstoff-Matrices eingelagert sind. Zumeist kamen hierbei Siliciumpartikel mit kleinen Partikelgrößen zum Einsatz, beispielsweise mit durchschnittlichen Partikelgrößen d₅₀ um 200 nm. Grund hierfür ist, dass kleinere Siliciumpartikel ein geringeres Siliciumaufnahmevermögen haben und deswegen bei der Lithiumeinlagerung eine geringere Volumenausdehnung erfahren als größere Siliciumpartikel, so dass die oben beschriebenen Probleme mit Silicium nur in geringerem Maße auftreten können. Beispielsweise sind in der Patentanmeldung mit der Anmeldenummer DE 102016202459.0 Kompositpartikel mit Si-Partikeln erwähnt, die durchschnittliche Partikelgrößen d₅₀ im Bereich von 50 bis 800 nm haben. Konkret sind hierfür Si-Partikel mit durchschnittlichen Partikelgrößen von 180 und 200 nm beschrieben. Silicium-Kohlenstoff-Kompositpartikel mit größeren Si-Partikeln sind ökonomisch von besonderem Interesse, da diese durch Mahlen leichter zugänglich sind und einfacher gehandhabt werden können als kleinteilige, nanoskalige Siliciumpartikel. Allerdings stellen für großteiligere Siliciumpartikel die eingangs beschriebenen Probleme, wie elektrochemisches Mahlung, SEI oder Fading, eine besondere Herausforderung dar. µm-skalige Siliciumpartikel mit Kohlenstoffbeschichtung sind beispielsweise in der EP 1024544 beschrieben. Die Kohlenstoffbeschichtung soll auf Grund elastischer Eigenschaften elektrochemisches Mahlen und SEI-Bildung verhindern. Poröse Kompositpartikel sind darin nicht beschrieben. Eine analoge Strategie verfolgt die US 20090208844 mit µm-skaligen, Kohlenstoff-beschichteten Si-Partikeln, in deren Kohlenstoffbeschichtung beispielsweise expandierter Graphit eingelagert ist. Auch, die Kohlenstoffbeschichtung der µm-skaligen Siliciumpartikel der US 8394532 enthält Kohlenstoff-Partikel, wie Graphit oder Kohlefasern. Die µm-skaligen Si-Partikel der US 20080166474 sind mit einer porösen Kohlenstoffbeschichtung versehen, die Fasern sowie Metalle enthält. Die US 20160172665 beschreibt Aktivmaterial für Lithium-Ionen-Batterien basierend auf Siliciumpartikeln, die mit einer oder mehreren identischen, mesoporösen Kohlenstoffhüllen beschichtet sind. Hinsichtlich der Ausgestaltung der Siliciumpartikel ist die US 20160172665 in der allgemeinen Beschreibung unspezifisch, konkret sind aber nur aggregierte Siliciumpartikel mit Primärpartikeldurchmessern im Bereich von 100 nm offenbart, wie aus den Figuren 5A und 5B ersichtlich ist. In der EP 1054462 werden unterschiedliche Ansätze zur Ausgestaltung von Anoden für Lithium-Ionen-Batterien gelehrt. In einer Ausgestaltungsform werden µm-skalige Siliciumpartikel mit einer unporösen Kohlenstoffschicht versehen. In einer weiteren Ausführungsform der EP 1054462 werden µm-skalige Siliciumpartikel beim Elektrodenbeschichtungsprozess in eine poröse Kohlenstoffmatrix eingebettet. Die WO2005/031898 beschreibt Kern-Schale-Kompo-sitpartikel mit einer porösen Kohlenstoffmalrix als Kern basierend auf Graphit, Silicium sowie kohlenstoffhaltigem Material sowie einer Schale aus kohlenstoffhaltigem Material. Die EP1205989 lehrt Kern-Schale-Kompositpartikel mit einem porösen, Silicium-Partikel enthaltenden Kern und einer KohlenstoffBeschichtung als Schale, wobei die Silicium-Partikel Durchmesser von ≤ 1 µm haben. Der Kern der Kern-Schale-Kompositpartikel der JP2008277232 enthält Graphitpartikel, amorphen Kohlenstoff sowie Siliciumpartikel mit durchschnittlichen Durchmessern von 0,05 bis 1 µm.

Vor diesem Hintergrund bestand die Aufgabe, mikroskalige Siliciumpartikel enthaltende Kompositpartikel bereitzustellen, die bei Einsatz in Lithium-Ionen-Batterien eine hohe Zyklenbeständigkeit ermöglichen, insbesondere zu einer möglichst geringen SEI-Bildung führen und/oder das elektrochemische Mahlen reduzieren. Zudem sollten die Silicium enthaltenden Kompositpartikel nach Möglichkeit eine hohe mechanische Stabilität besitzen und möglichst wenig spröde sein.

Gegenstand der Erfindung sind Kern-Schale-Kompositpartikel, deren Kern eine Siliciumpartikel enthaltende, poröse, Kohlenstoff-basierte Matrix ist, die erhältlich ist durch Carbonisieren von einem oder mehreren Kohlenstoff-Vorstufen, und deren Schale unporös ist und durch Carbonisierung von einem oder mehreren Kohlenstoff-Precursoren erhältlich ist wobei unporöse Schale bedeutet, dass etwaige in der Schale enthaltene Poren < 10 nm sind, bestimmt aus der Porengrößenverteilung nach BJH mittels Gasadsorption gemäß DIN 66134, wobei die Siliciumpartikel durchschnittliche Partikelgrößen (d₅₀) von 1, 5 bis 15 µm haben wobei die durchschnittlichen Partikelgrößen d₅₀ der Siliciumpartikel nach ISO 13320 mittels statischer Laserstreuung unter Anwendung des Mie-Modells mit dem Messgerät Horiba LA 950 mit Ethanol als Dispergiermedium für die Siliciumpartikel bestimmt werden, und der Kern der Kern-Schale-Kompositpartikel ≤ 1 Gew.-% an Leitadditiven enthält ausgewählt aus Graphit, Ruß, Carbon Nanotubes, Fullerene und Graphen, bezogen auf das Gesamtgewicht der Kern-Schale-Kompositpartikel.

Die Siliciumpartikel weisen volumengewichtete Partikelgrößenverteilungen mit Durchmesser-Perzentilen d₅₀ von bevorzugt ≥ 2 µm und besonders bevorzugt ≥ 2,5 µm auf. Die genannten Durchmesser-Perzentile d₅₀ sind vorzugsweise ≤ 13 µm, besonders bevorzugt ≤ 10 µm und am meisten bevorzugt ≤ 8 µm. Die volumengewichtete Partikelgrößenverteilung wird bestimmt nach ISO 13320 mittels statischer Laserstreuung unter Anwendung des Mie-Modells mit dem Messgerät Horiba LA 950 mit Ethanol als Dispergiermedium für die Siliciumpartikel.

Die Siliciumpartikel können isoliert oder agglomeriert, vorzugsweise nicht aggregiert in den Kompositpartikeln vorliegen. Die Siliciumpartikel sind vorzugsweise nicht aggregiert, vorzugsweise nicht agglomeriert und/oder vorzugsweise nicht nanostrukturiert.

Aggregiert bedeutet, dass sphärische oder weitestgehend sphärische Primärpartikel, wie sie beispielsweise zunächst in Gasphasenprozessen bei der Herstellung der Siliciumpartikel gebildet werden, im weiteren Reaktionsverlauf des Gasphasenprozesses zusammenwachsen und auf diese Weise Aggregate bilden. Diese Aggregate können im weiteren Reaktionsverlauf Agglomerate bilden. Agglomerate sind eine lose Zusammenballung von Aggregaten. Agglomerate können mit typischerweise eingesetzten Knet- und Dispergierverfahren leicht wieder in die Aggregate aufgespalten werden. Aggregate lassen sich mit diesen Verfahren nicht oder nur teilweise in die Primärpartikel zerlegen. Das Vorliegen von Siliciumpartikeln in Form von Aggregaten oder Agglomeraten kann beispielsweise mittels herkömmlicher Raster-Elektronen-Mikroskopie (REM) sichtbar gemacht werden. Statische Lichtstreuungsmethoden zur Bestimmung der Teilchengrößenverteilungen oder Partikeldurchmessern von Siliciumpartikeln können dagegen nicht zwischen Aggregaten oder Agglomeraten unterscheiden.

Nicht nanostrukturierte Siliciumpartikel haben im Allgemeinen charakteristische BET-Oberflächen. Die BET-Oberflächen der Siliciumpartikel betragen vorzugsweise 0,01 bis 30,0 m²/g, mehr bevorzugt 0,1 bis 25,0 m²/g, besonders bevorzugt 0,2 bis 20,0 m²/g und am meisten bevorzugt 0,2 bis 18,0 m²/g. Die BET-Oberfläche wird gemäß DIN 66131 (mit Stickstoff) bestimmt.

Die Siliciumpartikel können beispielsweise in kristalliner oder amorpher Form vorliegen und sind vorzugsweise nicht porös. Die Siliciumpartikel sind vorzugsweise sphärisch oder splitterförmige Partikel. Alternativ, aber weniger bevorzugt können die Siliciumpartikel auch eine Faserstruktur haben oder in Form von Silicium-haltigen Filmen oder Beschichtungen vorliegen.

Die Siliciumpartikel können beispielsweise auf elementarem Silicium, Siliciumoxid oder Silicium/Metall-Legierungen basieren. Bevorzugt ist elementares Silicium, da dieses die größte Speicherkapazität für Lithium-Ionen aufweist.

Die Siliciumpartikel können bevorzugt aus hochreinem Polysilicium, aber auch gezielt dotiertem Silicium oder metallurgischem Silicium bestehen, welches elementare Verunreinigung aufweisen kann. Weiterhin kann es mit anderen Metallen und Elementen legiert in Form von Siliciden vorliegen, z.B. mit literaturbekannten Metallen wie Li, Sn, Ca, Co, Ni, Cu, Cr, Ti, Al, Fe u.a. Diese Legierungen können binär, ternär oder multinär vorliegen. Zur Erhöhung der elektrochemischen Speicherkapazität ist ein besonders niedriger Gehalt an Fremdelementen bevorzugt.

Die Kohlenstoff-basierte Matrix des Kern-Schale-Kompositpartikels ist porös und enthält also Poren. Die Matrix kann als Gerüst für die Poren betrachtet werden. Die einzelnen Poren liegen vorzugsweise isoliert vor. Die Poren sind vorzugsweise nicht über Kanäle miteinander verbunden. Die Form der Poren kann beispielsweise ellipsoid, länglich, eckig, splitterförmig oder vorzugsweise sphärisch sein.

Die Porenwände haben eine Dicke von vorzugsweise 4 bis 1000 nm, besonders bevorzugt 24 bis 900 nm und am meisten bevorzugt 50 bis 800 nm (Bestimmungsmethode: Raster-Elektronen-Mikroskopie (REM)). Die Dicke der Porenwände bezeichnet allgemein den kürzesten Abstand zwischen zwei Poren.

Das gesamte Porenvolumen der Kern-Schale-Kompositpartikel entspricht vorzugsweise mindestens dem 2,5-fachen und besonders bevorzugt mindestens dem 2,8-fachen und am meisten bevorzugt mindestens dem 3-fachen des Volumens der darin befindlichen Siliciumpartikel. Das gesamte Porenvolumen der Kern-Schale-Kompositpartikel entspricht vorzugsweise höchstens dem 4-fachen und besonders bevorzugt höchstens dem 3,7-fachen und am meisten bevorzugt höchstens dem 3,4-fachen des Volumens der darin befindlichen Siliciumpartikel. In einer alternativen Ausführungsform, insbesondere wenn die Lithium-Ionen-Batterien unter Teillithierung betrieben werden, entspricht das gesamte Porenvolumen der Kern-Schale-Kompositpartikel vorzugsweise dem 0,3-fachen bis 2,4-fachen, besonders bevorzugt dem 0,6-fachen bis 2,1-fachen und am meisten bevorzugt dem 0,9-fachen bis 1,8-fachen des Volumens der darin befindlichen Siliciumpartikel. Das gesamte Porenvolumen pro Gramm Kompositpartikel ist definiert durch die Differenz der Kehrwerte aus Rohdichte (bestimmt mittels Heptan-Pyknometrie analog DIN 51901) und Skelettdichte (bestimmt mittels He-Pyknometrie gemäß DIN 66137-2).

Die Matrix enthält Poren mit einem mittleren Durchmesser von bevorzugt ≥ 50 nm, mehr bevorzugt ≥ 65 nm, besonders bevorzugt ≥ 70 nm und am meisten bevorzugt ≥ 100 nm. Die Matrix enthält Poren mit einem mittleren Durchmesser von vorzugsweise ≤ 22 µm, mehr bevorzugt ≤ 19 µm, besonders bevorzugt ≤ 15 µm-und am meisten bevorzugt ≤ 12 µm.

Die Siliciumpartikel können in den Poren der Matrix (lokale Poren) und/oder außerhalb der Poren der Matrix (globale Poren) vorliegen. Bevorzugt liegen die Si-Partikel in den Poren vor.

Die globalen Poren der Matrix haben einen mittleren Durchmesser von bevorzugt ≥ 50 nm, mehr bevorzugt ≥ 65 nm, besonders bevorzugt ≥ 70 nm und am meisten bevorzugt ≥ 100 nm. Die globalen Poren der Matrix haben Durchmesser von vorzugsweise ≤ 6 µm, mehr bevorzugt ≥ 5 µm, besonders bevorzugt ≥ 4 µm und am meisten bevorzugt 3 µm.

Die lokalen Poren der Matrix haben einen mittleren Durchmesser von bevorzugt ≥ 1 µm, mehr bevorzugt ≥ 1,5 µm, besonders bevorzugt ≥ 2 µm und am meisten bevorzugt ≥ 2,5 µm. Die lokalen Poren der Matrix haben Durchmesser von vorzugsweise ≥ 22 µm, mehr bevorzugt ≤ 19 µm, besonders bevorzugt ≤ 15 µm-und am meisten bevorzugt ≤ 12 µm.

Die Bestimmung der Poren-Durchmesser der Matrix erfolgt mittels Raster-Elektronen-Mikroskopie (REM). Die Maßgaben betreffend Poren-Durchmesser werden vorzugsweise von dem größten Durchmesser von zwei, besonders bevorzugt von drei zueinander orthogonalen Durchmessern erfüllt. Der mittlere Durchmesser der Poren bezeichnet hierbei vorzugsweise den Medianwert. Das Volumen eines Siliciumpartikels, der sich in einer Pore befindet, wird bei der Bestimmung eines Poren-Durchmessers dem Volumen der Pore zugeschlagen.

Eine Pore kann ein oder mehrere Siliciumpartikel enthalten. Die Poren der Matrix, die Siliciumpartikel enthalten, enthalten vorzugsweise ≤ 30, besonders bevorzugt ≤ 20, noch mehr bevorzugt ≤ 10 Siliciumpartikel, insbesondere Siliciumpartikel mit erfindungsgemäßen durchschnittlichen Partikelgrößen d₅₀.

Das Verhältnis der Durchmesser der Poren der Matrix, die Siliciumpartikel enthalten, und der Durchmesser der Siliciumpartikel ist vorzugsweise ≥ 1,1, besonders bevorzugt ≥ 1,6 und am meisten bevorzugt ≥ 1,8. Das vorgenannte Verhältnis der Durchmesser ist vorzugsweise ≤ 3, besonders bevorzugt ≤ 2,5 und am meisten bevorzugt ≤ 2 (Bestimmungsmethode: Raster-Elektronen-Mikroskopie (REM)).

Der Anteil der Siliciumpartikel, die sich in Poren der Matrix befinden, beträgt vorzugsweise ≥ 5%, mehr bevorzugt ≥ 20%, noch mehr bevorzugt ≥ 50%, besonders bevorzugt ≥ 80% und am meisten bevorzugt ≥ 90%, bezogen auf die Gesamtzahl der Siliciumpartikel der Kern-Schale-Kompositpartikel (Bestimmungsmethode: Raster-Elektronen-Mikroskopie (REM)).

Der Kern, beziehungsweise die Matrix, der Kern-Schale-Komposit-partikel hat volumengewichtete Partikelgrößenverteilungen mit Durchmesser-Perzentilen d₅₀ von vorzugsweise ≥ 2 µm, besonders bevorzugt ≥ 3 µm und am meisten bevorzugt ≥ 5 µm. Der d₅₀-wert ist vorzugsweise ≤ 90 µm, mehr bevorzugt ≤ 50 µm, besonders bevorzugt ≤ 30 µm und am meisten bevorzugt ≤ 20 µm. Die volumengewichtete Partikelgrößenverteilung ist erfindungsgemäß bestimmbar nach ISO 13320 mittels statischer Laserstreuung unter Anwendung des Mie-Modells mit dem Messgerät Horiba LA 950 mit Ethanol als Dispergiermedium für die Kern-Partikel.

Die Matrix basiert im Allgemeinen auf Kohlenstoff, insbesondere kristallinem oder amorphem Kohlenstoff. Es sind auch Mischungen aus kristallinem und amorphem Kohlenstoff oder Kohlenstoff mit kristallinen und amorphen Teilbereichen möglich. Die Matrix hat im Allgemeinen eine sphärische, beispielsweise kugelige Form.

Die Matrix basiert vorzugsweise zu 20 bis 80 Gew.-%, besonders bevorzugt 25 bis 70 Gew.-% und am meisten bevorzugt 30 bis 60 Gew.-% auf Kohlenstoff. Die Matrix enthält vorzugsweise 20 bis 80 Gew.-%, besonders bevorzugt 30 bis 75 Gew.-% und am meisten bevorzugt 40 bis 70 Gew.-% Siliciumpartikel. Die Angaben in Gew.-% beziehen sich je auf das Gesamtgewicht des Kerns des Kern-Schale-Kompositpartikel.

Der Anteil des Kerns beträgt vorzugsweise 80 bis 95 Gew.-% und besonders bevorzugt 85 bis 93 Gew.-%, bezogen auf das Gesamtgewicht der Kern-Schale-Kompositpartikel.

Der Kohlenstoff der Matrix ist erhältlich durch Carbonisieren von einem oder mehreren Kohlenstoff-Vorstufen.

Kohlenstoff-Vorstufen haben im Allgemeinen einen hohen Kohlenstoff-Gehalt und erzeugen bei der thermischen Überführung in Kohlenstoff leitfähige Strukturen. Die Kohlenstoffausbeuten beim Carbonisieren der Kohlenstoff-Vorstufen betragen vorzugsweise ≥ 15%, besonders bevorzugt ≥ 20% und am meisten bevorzugt ≥ 25%, bezogen auf das Gesamtgewicht der Kohlenstoff-Vorstufen.

Kohlenstoff-Vorstufen für die Matrix sind beispielsweise Resorcin-Formaldehyd-Harz, Phenol-Formaldehyd-Harz, Lignin oder Polyacrylnitril.

Der aus den Kohlenstoff-Vorstufen erzeugte Kohlenstoff kann die Poren in Form einer dünnen Schicht bedecken beziehungsweise eine Matrix um die Porenräume ausbilden.

Ferner kann der Kern der Kern-Schale-Kompositpartikel zusätzliche Aktivmaterialien basierend auf den Elementen Li, Fe, Al, Cu, Ca, K, Na, S, Cl, Zr, Ti, Pt, Ni, Cr, Sn, Mg, Ag, Co, Zn, B, P, Sb, Pb, Ge, Bi, seltene Erden oder Kombinationen aus ihnen, enthalten. Bevorzugte zusätzliche Aktivmaterialien basieren auf Li und Sn. Der Gehalt an zusätzlichen Aktivmaterialien ist bevorzugt ≤ 1 Gew.-% und besonders bevorzugt ≤ 100 ppm, bezogen auf das Gesamtgewicht der Kern-Schale-Kompositpartikel.

Der Kern der Kern-Schale-Kompositpartikel enthält ≤ 1 Gew.-% an einem oder mehreren Leitadditiven ausgewählt aus Graphit, (Leit-)Ruß, Carbon Nanotubes (CNTs), Fullerene oder Graphen, bezogen auf das Gesamtgewicht der Kern-Schale-Kompositpartikel. Bevorzugte Leitadditive sind Leitruß und Carbon Nanotubes. Der Gehalt an Leitadditiven ist bevorzugt ≤ 100 ppm, bezogen auf das Gesamtgewicht der Kern-Schale-Kompositpartikel. Am meisten bevorzugt sind keine Leitadditive enthalten.

Die Poren der porösen Matrix sind beispielsweise erhältlich, indem zur Herstellung der Matrix ein oder mehrere Opfermaterialien eingesetzt werden.

Beispielsweise sind poröse Matrices herstellbar durch Mischen von einem oder mehreren Opfermaterialien, einer oder mehreren Kohlenstoff-Vorstufen und Siliciumpartikeln und einer anschließenden Carbonisierungs-Stufe, in der die Kohlenstoff-Vorstufen zumindest teilweise zu Kohlenstoff umgesetzt werden, und wobei die Opfermaterialien vor, während oder nach der Carbonisierung zumindest teilweise in Poren überführt werden.

In einer bevorzugten Ausführungsform sind die Poren erhältlich durch Einsatz von einem oder mehreren Opfermaterialien, die mit einer oder mehreren Kohlenstoff-Vorstufen beschichtet werden, wobei die Opfermaterialien zu einem späteren Zeitpunkt wieder entfernt werden, und wobei die Beschichtung basierend auf den Kohlenstoff-Vorstufen vor, während oder nach dem Entfernen von Opfermaterial in eine Matrix basierend auf Kohlenstoff überführt wird. Auch auf diese Weise ist eine poröse Kohlenstoffmatrix zugänglich.

Poren, die Siliciumpartikel enthalten, sind beispielsweise erhältlich, indem die Siliciumpartikel zunächst mit einem oder mehreren Opfermaterialien beschichtet werden und die so erhaltenen Produkte mit einem oder mehreren der oben genannten Kohlenstoff-Vorstufen beschichtet werden und die Beschichtung basierend auf den Opfermaterialien zu einem späteren Zeitpunkt wieder entfernt wird, wobei die Beschichtung basierend auf den Kohlenstoff-Vorstufen vor oder während des Entfernens der Opfermaterialien in eine Matrix basierend auf Kohlenstoff überführt wird. Auf diese Weise entsteht um die Siliciumpartikel eine Pore. Die Opfermaterialien können in an sich herkömmlicher Weise mit weitgehend beliebigen Schichtdicken aufgebracht werden, so dass Kern-Schale-Kompositpartikel mit den gewünschten Porendurchmessern resultieren.

Die Beschichtung basierend auf den Opfermaterialien hat eine mittlere Schichtdicke im Bereich von vorzugsweise 5 bis 300 nm, besonders bevorzugt 20 bis 300 nm und am meisten bevorzugt 50 bis 100 nm (Bestimmungsmethode: Raster-Elektronen-Mikroskopie (REM)). Die Beschichtung basierend auf den Opfermaterialien weist zumindest an einer Stelle eine Schichtdicke von vorzugsweise 1 bis 300 nm, besonders bevorzugt 20 bis 200 nm und am meisten bevorzugt 50 bis 100 nm auf (Bestimmungsmethode: Raster-Elektronen-Mikroskopie (REM)).

Opfermaterialien können anorganischer oder vorzugsweise organischer Natur sein.

Beispiele für anorganische Opfermaterialien sind Oxide, Carbonate, Silicate, Carbide, Chloride, Nitride oder Sulfide der Elemente Silicium, Magnesium, Calcium, Zinn, Zink, Titan, Nickel. Konkrete Beispiele für anorganische Opfermaterialien sind Siliciumdioxid, Zinkoxid, Magnesiumoxid, Natriumchlorid, Magnesiumcarbonat und Nickelsulfid. Zinkoxid oder Nickelsulfid können beispielsweise mittels carbothermischer Reduktion in flüchtige Verbindungen überführt und freigesetzt werden, und Magnesiumcarbonat durch thermische Zersetzung. Siliciumdioxid, Magnesiumoxid können auf herkömmliche Weise mittels Säurebehandlung herausgeätzt werden.

Typische organische Opfermaterialien haben bei einer Temperatur ausgewählt aus dem Bereich von 25 bis 1000°C einen Masseverlust von ≥ 50 Gew.-%, bevorzugt ≥ 80 Gew.-% und besonders bevorzugt ≥ 90 Gew.-%.

Beispiele für organische Opfermaterialien sind Homo- oder Copolymere von ethylenisch ungesättigten Monomeren, wie Polyethylen, Polypropylen, Polystyrol, Polybutadien, Poly-tert-Butoxystyrol, Polyvinylchlorid, Polyvinylacetat, Polymethacrylmethacrylat, Polyacrylsäure, Polymethacrylat, Polyvinylstearat Polyvinyllaurat oder deren Copolymere; Polyvinylalkohol; Alkylenglycole, wie Ethylenglycol, Butylengylcol, Diethylengylcol, Triethylenglycol; Polyalkylenoxide, wie Polyethylenoxide, Polypropylenoxide oder deren Copolymere; Gamma-Butyrolacton; Propylencarbonat; Polysaccharide; Melaminharze oder Polyurethane.

Bevorzugte Opfermaterialien sind Polymere von ethylenisch ungesättigten Monomeren, Melaminharze, Polyalkylenoxide und Alkylenglycole. Besonders bevorzugte Opfermaterialien werden ausgewählt aus der Gruppe umfassend Polyethylen, Polystyrol, Polymethylmethacrylat, Alkylenglycole und Polyalkylenoxide, wie Polyethylenoxid, Polypropylenoxid und Polyethylenoxid-Polypropylenoxid-Copolymere, Polyvinylacetat, Polyvinylacetat-EthylenCopolymer, Polyvinylacetat-Ethylen-Acrylat-Terpolymer, StyrolButadien-Copolymer und Melaminharze.

Die Schale der Kern-Schale-Kompositpartikeln basiert im Allgemeinen auf Kohlenstoff, insbesondere auf amorphem Kohlenstoff.

Die Schale ist im Allgemeinen unporös. Die Carbonisierung der erfindungsgemäßen Kohlenstoff-Precursoren führt zwangsläufig zu der unporösen Schale.

Die Poren der Schale sind < 10 nm, bevorzugt ≤ 5 nm und am meisten bevorzugt ≤ 2 nm (Bestimmungsmethode: Porengrößenverteilung nach BJH (Gasadsorption) gemäß DIN 66134).

Die Schale hat vorzugsweise eine Porosität von ≤ 2% und besonders bevorzugt ≤ 1% (Bestimmungsmethode der Gesamtprosität: 1 minus [Quotient aus Rohdichte (bestimmt mittels Xylol-Pyknometrie gemäß DIN 51901) und Skelettdichte (bestimmt mittels He-Pyknometrie gemäß DIN 66137-2)]).

Die Schale umhüllt den Kern der Kern-Schale-Kompositpartikel vorzugsweise zumindest teilweise und besonders bevorzugt vollständig. Alternativ kann die Schale auch nur die oberflächennahen Poreneingänge des Kerns ausfüllen beziehungsweise abdichten oder imprägnieren.

Die Schale ist im Allgemeinen undurchlässig für flüssige Medien, insbesondere für wässrige oder organische Lösungsmittel oder Lösungen. Besonders bevorzugt ist die Schale undurchlässig für wässrige oder organische Elektrolyte.

Die Flüssigkeitsdichtigkeit der Kern-Schale-Kompositpartikel ist vorzugsweise ≥ 95%, besonders bevorzugt ≥ 96% und am meisten bevorzugt ≥ 97%. Die Flüssigkeitsdichtigkeit kann beispielsweise bestimmt werden entsprechend der hierfür weiter unten für die Beispiele angegebenen Bestimmungsmethode.

Ferner ergibt die Differenz der Kehrwerte aus Rohdichte (bestimmt mittels Heptan-Pyknometrie analog DIN 51901) und Reindichte (bestimmt mittels He-Pyknometrie gemäß DIN 66137-2) das nicht Lösungsmittel-zugängliche Porenvolumen pro Gramm Kern-Schale-Kompositpartikel.

Der Anteil der Schale beträgt vorzugsweise 1 bis 25 Gew.-%, besonders bevorzugt 5 bis 20 Gew.-% und am meisten bevorzugt 7 bis 15 Gew.-%, bezogen auf das Gesamtgewicht der Kern-Schale-Kompositpartikel.

Die Schale der Kern-Schale-Kompositpartikel ist erhältlich durch Carbonisieren von einem oder mehreren Kohlenstoff-Precursoren für die Schale.

Beispiele für Kohlenstoff-Precursoren für die Schale sind Vorstufen, die zu HardCarbon (nicht-graphitisierbar bei Temperaturen von 2500 bis 3000°C) oder SoftCarbon (graphitisierbar bei Temperaturen von 2500 bis 3000°C) führen, beispielsweise Teere oder Peche, insbesondere hochschmelzende Peche, Polyacrylnitril oder Kohlenwasserstoffe mit 1 bis 20 Kohlenstoffatomen. Besonders bevorzugt sind mesogenes Pech, Mesophasen-Pech, Petrolpech und Steinkohlenteerpech.

Beispiele für Kohlenwasserstoffe sind aliphatische Kohlenwasserstoffe mit 1 bis 10 Kohlenstoffatomen, insbesondere 1 bis 6 Kohlenstoffatomen, vorzugsweise Methan, Ethan, Propan, Propylen, Butan, Buten, Pentan, Isobutan, Hexan; ungesättigte Kohlenwasserstoffe mit 1 bis 4 Kohlenstoffatomen, wie Ethylen, Acetylen oder Propylen; aromatische Kohlenwasserstoffe, wie Benzol, Toluol, Styrol, Ethylbenzol, Diphenylmethan oder Naphthalin; weitere aromatische Kohlenwasserstoffe, wie Phenol, Cresol, Nitrobenzol, Chlorbenzol, Pyridin, Anthracen, Phenanthren.

Bevorzugte Kohlenstoff-Precursoren für die Schale sind Mesogenes Pech, Mesophasen-Pech, Petrolpech, Steinkohlenteerpech, Methan, Ethan, Ethylen, Acetylen, Benzol, Toluol. Besonders bevorzugt sind Acetylen, Toluol und insbesondere Ethylen, Benzol und SoftCarbon aus Petrolpech oder Steinkohlenteerpech.

Die Kohlenstoff-Precursoren für die Schale können beispielsweise auf den Kern, beziehungsweise auf die Matrix, appliziert und anschließend carbonisiert werden. Kohlenwasserstoffe mit 1 bis 20 Kohlenstoffatomen werden vorzugsweise über das CVD-Verfahren carbonisiert, die anderen Kohlenstoff-Precursoren für die Schale werden vorzugsweise thermisch carbonisiert.

Die Kern-Schale-Kompositpartikel können beispielsweise als isolierte Partikel oder als lockere Agglomerate vorliegen. Die Kern-Schale-Kompositpartikel können in Form von Splittern oder Flakes oder vorzugsweise in sphärischer Form vorkommen.

Die volumengewichtete Partikelgrößenverteilungen mit Durchmesser-Perzentilen d₅₀ der Kern-Schale-Kompositpartikel beträgt vorzugsweise ≤ 1 mm, besonders bevorzugt ≤ 50 µm und am meisten bevorzugt ≤ 20 µm, aber vorzugsweise ≥ 1,5 µm, besonders bevorzugt ≥ 3 µm und am meisten bevorzugt ≥ 5 µm.

Die Partikelgrößenverteilung der Kern-Schale-Kompositpartikel ist bevorzugt monomodal, kann aber auch bimodal oder polymodal sein und ist vorzugsweise schmal. Die volumengewichtete Partikelgrößenverteilung der Kern-Schale-Kompositpartikel ist charakterisiert durch einen Wert für (d₉₀-d₁₀) /d₅₀ von vorzugsweise ≤ 2,5 und besonders bevorzugt ≤ 2.

Die Schale bzw. die Kern-Schale-Kompositpartikel sind durch BET-Oberflächen charakterisiert von vorzugsweise ≤ 50 m²/g, besonders bevorzugt ≤ 25 m²/g und am meisten bevorzugt ≤ 10 m²/g (Bestimmung gemäß DIN 66131 (mit Stickstoff)).

Die Rohdichte der Kern-Schale-Kompositpartikel ist vorzugsweise ≥ 0,8 g/cm³, besonders bevorzugt ≥ 0,9 g/cm³ und am meisten bevorzugt ≥ 1,0 g/cm³ (bestimmt mittels Heptan-Pyknometrie analog DIN 51901).

Bei dem in den Kern-Schale-Kompositpartikeln enthaltenen Kohlenstoff kann es sich ausschließlich um einen durch Carbonisierung erhaltenen Kohlenstoff handeln. Alternativ können auch weitere Komponenten als Kohlenstoffquelle eingesetzt werden, wie beispielsweise Graphit, Leitruß, Carbon Nanotubes (CNTs) oder andere Kohlenstoffmodifikationen. Bevorzugt ist ein hoher Anteil des Kohlenstoffs der Kern-Schale-Kompositpartikel durch Carbonisierung erhalten, beispielsweise bevorzugt ≥ 40 Gew.-%, besonders bevorzugt ≥ 70 Gew.-% und am meisten bevorzugt ≥ 90 Gew.-%, bezogen auf die Gesamtmasse des Kohlenstoffs der Kern-Schale-Kompositpartikel.

Die Kern-Schale-Kompositpartikel enthalten vorzugsweise 20 bis 90 Gew.-%, besonders bevorzugt 25 bis 85 Gew.-% und am meisten bevorzugt 30 bis 80 Gew.-% Siliciumpartikel. Kohlenstoff ist in den Kern-Schale-Kompositpartikeln zu vorzugsweise 20 bis 80 Gew.-%, besonders bevorzugt 25 bis 75 Gew.-% und am meisten bevorzugt 20 bis 70 Gew.-% enthalten. Gegebenenfalls können auch Sauerstoff und vorzugsweise Stickstoff in den Kern-Schale-Kompositpartikel enthalten sein; diese liegen vorzugsweise chemisch gebunden in Form von Heterocyclen vor, beispielsweise als Pyridin- und Pyrrol-Einheiten (N), Furan (O) oder Oxazole (N, O). Der Sauerstoff-Gehalt der Kern-Schale-Kompositpartikel ist vorzugsweise ≤ 20 Gew-%, besonders bevorzugt ≤ 10 Gew-% und am meisten bevorzugt ≤ 8 Gew-%. Der Stickstoff-Gehalt der Kern-Schale-Kompositpartikel ist vorzugsweise im Bereich von ≤ 10 Gew.-% und besonders bevorzugt 0,2 bis 5 Gew.-%. Die Angaben in Gew.-% beziehen sich jeweils auf das Gesamtgewicht eines Kern-Schale-Kompositpartikels und addieren sich insgesamt zu 100 Gew.-% auf.

Die Kern-Schale-Kompositpartikel können gegebenenfalls zusätzliche Komponenten enthalten, beispielsweise basierend auf inaktiven Materialien, wie Metallen (z. B. Kupfer), Oxiden, Carbiden oder Nitriden. Damit kann die elektrochemische Stabilität positiv beeinflusst werden. Der Anteil der inaktiven Materialien ist vorzugsweise ≤ 10 Gew-%, mehr bevorzugt ≤ 5 Gew-% und besonders bevorzugt ≤ 1 Gew-%, bezogen auf das Gesamtgewicht der Kern-Schale-Kompositpartikel. Am meisten bevorzugt sind keine solchen inaktiven Materialien enthalten.

Ein weiterer Gegenstand der Erfindung sind Verfahren zur Herstellung von Kern-Schale-Kompositpartikeln durch
1) a) Beschichten von Siliciumpartikeln, die durchschnittliche Partikelgrößen von 1,5 bis 15 µm haben, mit einem oder mehreren Opfermaterialien und/oder
   b) Mischen von Siliciumpartikeln, die durchschnittliche Partikelgrößen von 1,5 bis 15 µm haben, mit einem oder mehreren Opfermaterialien,
   wobei die durchschnittlichen Partikelgrößen d₅₀ der Silicium-partikel nach ISO 13320 mittels statischer Laserstreuung unter Anwendung des Mie-Modells mit dem Messgerät Horiba LA 950 mit Ethanol als Dispergiermedium für die Siliciumpartikel bestimmt werden,
2) Beschichten des Produkts aus Stufe 1) mit einem oder mehreren Kohlenstoff-Vorstufen,
3) Carbonisieren des Produkts aus Stufe 2),
   wobei die Opfermaterialien in dieser Carbonisierungsstufe oder in einer weiteren Stufe 4) zersetzt und freigesetzt werden unter Bildung eines porösen Komposits,
5) Beschichten des so erhaltenen porösen Komposits mit einem oder mehreren Kohlenstoff-Precursoren für die Schale,
6) Carbonisieren des Produkts aus Stufe 5) und anschließend
7) gegebenenfalls Entfernen von Unter- oder Überkorn, beispielsweise durch typische Klassierungstechniken, wie Sieben oder Sichten.

Das Beschichten in Stufe 1a) kann beispielsweise erfolgen, indem Opfermaterialien aus Dispersionen enthaltend Siliciumpartikel und Opfermaterialien ausgefällt werden. Hierbei scheiden sich Opfermaterialien auf Siliciumpartikeln ab. Durch anschließende Filtration, Zentrifugation und/oder Trocknung können die so beschichteten Siliciumpartikel isoliert werden. Alternativ können die Siliciumpartikel auch auf herkömmliche Weise in Opfermaterialien einpolymerisiert werden.

Das Opfermaterial für Stufe 1b) liegt vorzugsweise in Form von Partikeln vor. Opfermaterialpartikel können auf herkömmliche Weise durch Kristallisation oder Polymerisation erhalten werden. Die Opfermaterialpartikel für Stufe 1b) enthalten im Allgemeinen kein Silicium. Die Produkte aus Stufe 1b) sind allgemein eine Abmischung aus Opfermaterialpartikeln und Siliciumpartikeln. Die Siliciumpartikel tragen allgemein keine Beschichtung aus Opfermaterialpartikeln.

Das Beschichten in Stufe 2) mit den Kohlenstoff-Vorstufen kann nach analogen Verfahren erfolgen wie für Stufe 1a) beschrieben.

Das Carbonisieren in Stufe 3) kann beispielsweise thermisch erfolgen, vorzugsweise bei Temperaturen von 400 bis 1400°C, besonders bevorzugt 500 bis 1100°C und am meisten bevorzugt 700 bis 1000°C. Hierfür können die herkömmlichen Reaktoren und sonstige übliche Reaktionsbedingungen Anwendung finden.

Das organische Opfermaterial oder anorganisches Opfermaterial, wie Carbonate, Oxide oder Sulfide, kann in Stufe 3) oder in einer weiteren thermischen Behandlung 4) zersetzt werden. Alternativ können Opfermaterialien, insbesondere anorganische Opfermaterialien, wie SiO₂ oder MgO, durch Ätzen, beispielsweise mit Salzsäure, Essigsäure oder Flusssäure, in einer Stufe 4) freigesetzt werden.

Das Beschichten in Stufe 5) kann im Falle der Kohlenwasserstoffe mit 1 bis 20 Kohlenstoffatomen als Kohlenstoff-Precursoren nach herkömmlichen CVD-Verfahren erfolgen. Mit den sonstigen erfindungsgemäßen Kohlenstoff-Precursoren für die Schale kann das poröse Komposit beschichtet werden wie für Stufe 1a) beschrieben.

Das Carbonisieren in Stufe 6) kann analog durchgeführt werden, wie für Stufe 3) beschrieben, vorzugsweise durch thermische Behandlung.

Die weitere Ausgestaltung der einzelnen Beschichtungs- oder Carbonisierungsschritte oder auch der Stufe 4) kann auf an sich bekannte Weise in herkömmlichen Vorrichtungen erfolgen, wie dem Fachmann auf dem vorliegenden technischen Gebiet vertraut ist.

Ein weiterer Gegenstand der vorliegenden Erfindung ist die Verwendung der erfindungsgemäßen Kern-Schale-Kompositpartikel in Elektrodenmaterialien, insbesondere in Anodenmaterialien, für Lithiumionen-Batterien, insbesondere zur Herstellung der negativen Elektroden von Lithiumionen-Batterien.

Die Elektrodenmaterialien enthalten vorzugsweise ein oder mehrere Bindemittel, gegebenenfalls Graphit, gegebenenfalls eine oder mehrere weitere elektrisch leitende Komponenten und gegebenenfalls ein oder mehrere Additive, dadurch gekennzeichnet, dass ein oder mehrere Kern-Schale-Kompositpartikel enthalten sind.

Bevorzugte Rezepturen für die Elektrodenmaterialien enthalten vorzugsweise 50 bis 95 Gew.-%, insbesondere 60 bis 85 Gew.-% Kern-Schale-Kompositpartikel; 0 bis 40 Gew.-%, insbesondere 0 bis 20 Gew.-% weitere elektrisch leitende Komponenten; 0 bis 80 Gew.-%, insbesondere 5 bis 30 Gew.-% Graphit; 0 bis 25 Gew.-%, vorzugsweise 1 bis 20 Gew.-%, besonders bevorzugt 5 bis 15 Gew.-% Bindemittel; und gegebenenfalls 0 bis 80 Gew.-%, insbesondere 0,1 bis 5 Gew.-% Additive; wobei sich die Angaben in Gew.-% auf das Gesamtgewicht des Anodenmaterials beziehen und sich die Anteile aller Bestandteile des Anodenmaterials auf 100 Gew.-% aufsummieren.

Ein weiterer Gegenstand der Erfindung sind Lithium-Ionen-Batterien umfassend eine Kathode, eine Anode, einen Separator und einen Elektrolyt, dadurch gekennzeichnet, dass die Anode erfindungsgemäße Kern-Schale-Kompositpartikel enthält.

In einer bevorzugten Ausführungsform der Lithium-Ionen-Batterien ist das Anodenmaterial der vollständig geladenen Lithium-Ionen-Batterie nur teilweise lithiiert.

Ein weiterer Gegenstand der vorliegenden Erfindung sind Verfahren zum Beladen von Lithium-Ionen-Batterien umfassend eine Kathode, eine Anode, einen Separator und einen Elektrolyt, dadurch gekennzeichnet, dass die Anode erfindungsgemäße Kern-Schale-Kompositpartikel enthält; und das Anodenmaterial beim vollständigen Laden der Lithium-Ionen-Batterie nur teilweise lithiiert wird.

Ein weiterer Gegenstand der Erfindung ist die Verwendung der erfindungsgemäßen Anodenmaterialien in Lithium-Ionen-Batterien, die so konfiguriert sind, dass die Anodenmaterialien im vollständig geladenen Zustand der Lithium-Ionen-Batterien nur teilweise lithiiert sind.

Neben den Kern-Schale-Kompositpartikeln können zur Herstellung der Elektrodenmaterialien und Lithium-Ionen-Batterien die hierfür gängigen Ausgangsmaterialien eingesetzt werden und die hierfür üblichen Verfahren zur Herstellung der Elektrodenmaterialien und Lithium-Ionen-Batterien Anwendung finden, wie beispielsweise in der WO 2015/117838 oder der Patentanmeldung mit der Anmeldenummer DE 102015215415.7 beschrieben.

Die Lithium-Ionen-Batterien sind vorzugsweise so aufgebaut beziehungsweise so konfiguriert und/oder werden vorzugsweise so betrieben, dass das Material der Anode (Anodenmaterial), insbesondere die Kern-Schale-Kompositpartikel, in der vollständig geladenen Batterie nur teilweise lithiiert ist. Vollständig geladen bezeichnet den Zustand der Batterie, in dem das Anodenmaterial der Batterie, insbesondere die Kern-Schale-Kompositpartikel, ihre höchste Lithiierung aufweist. Teilweise Lithiierung des Anodenmaterials bedeutet, dass das maximale Lithiumaufnahmevermögen der Aktivmaterialpartikel im Anodenmaterial, insbesondere der Kern-Schale-Kompositpartikel, nicht ausgeschöpft wird.

Das Verhältnis der Lithiumatome zu den Siliciumatomen in der Anode einer Lithium-Ionen-Batterie (Li/Si-Verhältnis) kann beispielsweise über den elektrischen Ladungsfluss eingestellt werden. Der Lithiierungsgrad des Anodenmaterials beziehungsweise der im Anodenmaterial enthaltenen Siliciumpartikel ist proportional zur geflossenen elektrischen Ladung. Bei dieser Variante wird beim Laden der Lithium-Ionen-Batterie die Kapazität des Anodenmaterials für Lithium nicht voll ausgeschöpft. Dies resultiert in einer teilweisen Lithiierung der Anode.

Bei einer alternativen, bevorzugten Variante wird das Li/Si-Verhältnis einer Lithium-Ionen-Batterie durch das Anoden zu Kathoden-Verhältnis (Zellbalancing) eingestellt. Hierbei werden die Lithium-Ionen-Batterien so ausgelegt, dass das Lithiumaufnahmevermögen der Anode vorzugsweise größer ist als das Lithiumabgabevermögen der Kathode. Dies führt dazu, dass in der vollständig geladenen Batterie das Lithiumaufnahmevermögen der Anode nicht voll ausgeschöpft ist, d.h. dass das Anodenmaterial nur teilweise lithiiert ist.

Bei der Lithium-Ionen-Batterie ist das Verhältnis der Lithium-Kapazität der Anode zur Lithium-Kapazität der Kathode (Anoden zu Kathoden-Verhältnis) bevorzugt ≥ 1,15, besonders bevorzugt ≥ 1,2 und am meisten bevorzugt ≥ 1,3. Der Begriff Lithium-Kapazität bezeichnet hierbei vorzugsweise die nutzbare Lithium-Kapazität. Die nutzbare Lithium-Kapazität ist ein Maß für die Fähigkeit einer Elektrode, Lithium reversibel zu speichern. Die Bestimmung der nutzbaren Lithium-Kapazität kann beispielsweise über Halbzellmessungen der Elektroden gegen Lithium erfolgen. Die nutzbare Lithium-Kapazität wird in mAh bestimmt. Die nutzbare Lithium-Kapazität entspricht allgemein der gemessenen Delithiierungskapazität bei einer Lade- und Entladerate von C/2 im Spannungsfenster von 0,8 V bis 5 mV. C in C/2 bezieht sich dabei auf die theoretische, spezifische Kapazität der Elektrodenbeschichtung. Detaillierte Angaben zur experimentellen Vorgehensweise für die Bestimmung des Anoden zu Kathoden-Verhältnisses finden sich weiter unten zu Beispiel 4 unter der Zwischenüberschrift "b) Kapazitätsbestimmung zur Einstellung des Anoden zu Kathoden-Verhältnisses (A/K)".

Die Anode wird mit vorzugsweise ≤ 1500 mAh/g, besonders bevorzugt ≤ 1400 mAh/g und am meisten bevorzugt ≤ 1300 mAh/g beladen, bezogen auf die Masse der Anode. Die Anode wird bevorzugt mit mindestens 600 mAh/g, besonders bevorzugt ≥ 700 mAh/g und am meisten bevorzugt ≥ 800 mAh/g beladen, bezogen auf die Masse der Anode. Diese Angaben beziehen sich vorzugsweise auf die vollständig geladene Lithium-Ionen-Batterie.

Der Lithiierungsgrad von Silicium beziehungsweise die Ausnutzung der Kapazität von Silicium für Lithium (Si-Kapazitätsnutzung α) kann beispielsweise bestimmt werden, wie in der Patentanmeldung mit der Veröffentlichungsnummer WO2017 /025346 A1 auf Seite 11, Zeile 4 bis Seite 12, Zeile 25 beschrieben, insbesondere an Hand der dort genannten Formel für die Si-Kapazitätsnutzung α und den ergänzenden Angaben unter den Überschriften "Bestimmung der DelithiierungsKapazität β" und "Bestimmung des Si-Gewichtsanteils ωₛᵢ" ("incorporated by reference").

Bei der teilweisen Lithiierung beträgt das Li/Si-Verhältnis im Anodenmaterial im vollständig geladenen Zustand der Lithium-Ionen-Batterie vorzugsweise ≤ 3.5, besonders bevorzugt ≤ 3,1 und am meisten bevorzugt ≤ 2,6. Das Li/Si-Verhältnis im Anodenmaterial im vollständig geladenen Zustand der Lithium-Ionen-Batterie ist vorzugsweise ≥ 0,22, besonders bevorzugt ≥ 0,44 und am meisten bevorzugt ≥ 0,66.

Die Kapazität des Siliciums des Anodenmaterials der Lithium-Ionen-Batterie wird vorzugsweise zu ≤ 80%, besonders bevorzugt zu ≤ 70% und am meisten bevorzugt zu ≤ 60% genutzt, bezogen auf eine Kapazität von 4200 mAh pro Gramm Silicium.

Die erfindungsgemäßen Kern-Schale-Kompositpartikel zeichnen sich durch ein deutlich verbessertes elektrochemisches Verhalten aus und führen zu Lithiumionen-Batterien mit hohen volumetrischen Kapazitäten und hervorragenden Anwendungseigenschaften. Die Schale bzw. die Kern-Schale-Kompositpartikel sind permeabel für Lithium-Ionen und Elektronen und ermöglichen somit den Ladungstransport. Die SEI in Lithiumionen-Batterien kann mit den erfindungsgemäßen Kompositpartikeln in großem Umfang reduziert werden und platzt auf Grund des erfindungsgemäßen Designs der Kompositpartikel nicht mehr oder zumindest in weit geringerem Umfang ab. All dies führt zu einer hohen Zyklenbeständigkeit entsprechender Lithiumionen-Batterien. Die vorteilhaften Effekte werden durch die erfindungsgemäße Ausgestaltung der Kern-Schale-Kompositpartikel bewirkt. Eine weitere Verbesserung dieser vorteilhaften Effekte kann erreicht werden, wenn die Batterien unter Teilbeladung betrieben werden. Diese Merkmale wirken in synergistischer Weise zusammen.

Die erfindungsgemäße Kohlenstoff-Basis der Kompositpartikel ist vorteilhaft für die Leitfähigkeit der Kern-Schale-Kompositpartikel, so dass sowohl der Lithium- als auch den Elektronentransport zum Silicium-basierten Aktivmaterial gewährleistet ist. Durch einen direkten Kontakt zwischen den Siliciumpartikeln und den Porenwänden der Matrix kann der Ladungstransport zum Silicium beschleunigt werden, insbesondere wenn zwischen den Siliciumpartikeln und der Matrix eine chemische Anbindung vorliegt.

Die erfindungsgemäßen Kern-Schale-Kompositpartikel sind auch überraschend stabil und mechanisch belastbar und verfügen insbesondere über eine hohe Druckstabilität und eine hohe Scherstabilität.

Schließlich kann durch die erfindungsgemäßen Komposit-Partikelgrößenverteilungen die Verarbeitbarkeit der Materialien zu Elektrodentinten und -beschichtungen verbessert und eine homogene Verteilung der Partikel in den Elektroden erreicht werden.

Die nachfolgenden Beispiele dienen zur weiteren Erläuterung der Erfindung:
Folgende analytische Methoden und Geräte wurden zur Charakterisierung eingesetzt:
Rasterelektronenmikroskopie (REM/EDX):
Die mikroskopischen Untersuchungen wurden mit einem Rasterelektronenmikroskop Zeiss Ultra 55 und einem energiedispersem Röntgenspektrometer INCA x-sight durchgeführt. Die Proben wurden vor der Untersuchung zur Verhinderung von Aufladungsphänomenen mit einem Baltec SCD500 Sputter-/Carbon-Coating mit Kohlenstoff bedampft. Die in den Abbildungen gezeigten Querschnitte der Kern-Schale-Kompositpartikel wurden mit einem Ionencutter Leica TIC 3X bei 6 kV erzeugt.

Anorganische Analytik / Elementaranalyse:
Die in den Beispielen angegebenen C-Gehalte wurden mit einem Leco CS 230 Analysator ermittelt, zur Bestimmung von O- und ggf. N- bzw. H-Gehalten wurde ein Leco TCH-600 Analysator eingesetzt. Die qualitative und quantitative Bestimmung von anderen angegebenen Elementen in den erhaltenene Kern-Schale-Kompositpartikeln wurden mittels ICP (inductively coupled plasma)-Emissionspektrometrie (Optima 7300 DV, Fa. Perkin Elmer) bestimmt. Die Proben wurden dazu in einer Mikrowelle (Microwave 3000, Fa. Anton Paar) sauer aufgeschlossen (HF/HNO₃). Die ICP-OES-Bestimmung orientiert sich an der ISO 11885 "Wasserbeschaffenheit - Bestimmung von ausgewählten Elementen durch induktiv gekoppelte Plasma-Atom-Emissionsspektrometrie (ICP-OES) (ISO 11885:2007); Deutsche Fassung EN ISO 11885:2009", die zur Untersuchung saurer, wässriger Lösungen eingesetzt wird (z.B. angesäuerte Trinkwasser-, Abwasser- und andere Wasserproben, Königswasserextrakte von Böden und Sedimenten).

Partikelgrößenbestimmung:
Die Bestimmung der Partikelgrößenverteilung erfolgte im Rahmen dieser Erfindung nach ISO 13320 mittels statischer Laserstreuung mit einem Horiba LA 950. Dabei muss bei der Vorbereitung der Proben besondere Sorgfalt auf die Dispergierung der Partikel in der Messlösung aufgewendet werden, um statt Einzelpartikel nicht die Größe von Agglomeraten zu messen. Für die hier untersuchten Kern-Schale-Kompositpartikel wurden die Partikel in Ethanol dispergiert. Dazu wurde die Dispersion vor der Messung bei Bedarf 4 min in einem Hielscher Ultraschall-Laborgerät Modell UIS250v mit Sonotrode LS24d5 mit 250 W Ultraschall behandelt.

Oberflächenmessung nach BET:
Die spezifische Oberfläche der Materialien wurde über Gasadsoprtion mit Stickstoff mit einem Gerät Sorptomatic 199090 (Porotec) oder Gerät SA-9603MP (Horiba) nach der BET-Methode gemessen.

Si-Zugänglichkeit gegenüber flüssigen Medien (Flüssigkeitsdichtigkeit) :
Die Bestimmung der Zugänglichkeit von Silicium in den Kern-Schale-Kompositpartikeln gegenüber flüssigen Medien wurde mit folgender Testmethode an Materialien mit bekanntem Silicium-Gehalt (aus Elementaranalyse) durchgeführt:
0,5 - 0,6 g Kern-Schale-Kompositpartikel wurden mit 20 ml einer Mischung aus NaOH (4M; H₂O) und Ethanol (1:1 vol.) zunächst mittels Ultraschall dispergiert und anschließend 120 min bei 40 °C gerührt. Die Komposit-Partikel wurden über 200 nm Nylonmembran filtriert, mit Wasser mit zum Neutral-pH gewaschen und anschließend im Trockenschrank bei 100 °C/50-80 mbar getrocknet. Der Silicium-Gehalt nach der NaOH-Behandlung wurde bestimmt und mit dem Si-Gehalt vor dem Test verglichen. Bei einer relativen Änderung des Si-Gehalts von ≤ 5% wird die Komposit-Struktur als dicht angesehen (entspricht einer Dichtigkeit von ≥95%).

Reindichte:
Die Reindichte (= Skelettdichte, d.h. Dichte des porösen Festkörpers basierend auf dem Volumen ausschließlich der Porenräume) wurde mittels He-Pyknometrie gemäß DIN 66137-2 bestimmt.

Rohdichte:
Die Rohdichte (= Dichte des porösen Festkörpers basierend auf dem Volumen einschließlich der Porenräume) wurde in Anlehnung an die Norm DIN 51901 "Prüfung von Kohlenstoffmaterialien - Bestimmung der Dichte nach dem Xylolverfahren - Feststoffe" mittels Pyknometrie an Dispersionen der Kompositpulver in Heptan als Mittelwert von mindestens 2 Messungen ermittelt.

Theoretische, spezifische Kapazität:
Die in den Beispielen angegebene theoretische, spezifische Kapazität der erhaltenen Kern-Schale-Kompositpartikel wurde nicht experimentell ermittelt, sondern aus der elementaren Zusammensetzung der Materialien berechnet. Dabei wurden für die Berechnung folgende Kapazitäten der reinen Komponenten zugrunde gelegt: Si 4200 mAh/g; (amorpher) Kohlenstoff 200 mAh/g; N (als Teil der amorphen C-Matrix) 200 mAh/g. Weiterhin wurde bei der Berechnung angenommen, dass in den Kompositen enthaltene O-Gehalte in Form von SiO₂ vorliegen und damit den Beitrag des aktiven Siliciums unter Berücksichtigung des SiO₂-Gehalts herabsetzen.

Folgende Materialien wurden aus kommerziellen Quellen bezogen bzw. selber hergestellt und ohne weitere Reinigung direkt eingesetzt:
Silicium-Pulver A (splitterförmige, nicht-aggregierte Si-Partikel, d₅₀ = 800 nm, hergestellt durch Nassmahlung in einer Rührwerkskugelmühle in Ethanol (Feststoffgehalt 20 Gew-%) und anschließende Trocknung);
Silicium-Pulver B (splitterförmige, nicht-aggregierte Si-Partikel, d₅₀ = 4,5 µm, hergestellt durch Trockenmahlung in einer Fließbettstrahlmühle);
Pech (hochschmelzend; Erweichungspunkt 235 °C).

### Beispiel 1:

Kern-Schale-Kompositpartikel (unporöse Schale, Kern mit globaler Porosität, Si-Partikel mit d₅₀ = 4,5 µm):
a) Herstellung von Opfermaterial-Partikeln 20,8 g Melamin (Sigma-Aldrich #M2659) und 29,6 g Formaldehyd (Sigma-Aldrich, 252549; 80,0 g einer 37%-igen Lösung in Wasser) wurden eine Stunde bei 50°C gerührt. Danach wurden 1200 mL verdünnte Salpetersäure (pH 3,5) zugegeben und 50 Minuten bei 100°C gerührt. Nach dem Abkühlen wurde die überstehende Lösung abdekantiert und der Feststoff 15 h bei 100°C getrocknet. Dabei wurden 25,9 g sphärische Melaminharz-Partikel mit einem Durchmesser von D50 von 1-2 µm erhalten.
b) Beschichten von Siliciumpartikeln und des Produkts aus Beispiel 1a mit Kohlenstoffvorstufe
   15 g Silicium-Pulver B (d₅₀ = 4,5 µm) und 6,5 g Melaminharz-Partikel aus Beispiel 1a wurden mittels Ultraschall (Hielscher UIS250V; Amplitude 80%, Cycle: 0,75; Dauer: 30 min) dispergiert, 8,2 g Resorcin (Sigma-Aldrich, W358908) und 6,7 g Formaldehyd (18,1 g einer 37%-igen Lösung in Wasser) unter Rühren zugegeben. Anschließend wurde der pH durch Zugabe von 4 mL Ammoniak (32%) auf pH 7 eingestellt und das Gemisch für 4 h auf 90 °C erhitzt. Nach dem Abkühlen wurde die Suspension über einen Rundfilter (Partikelretention 20 µm) filtriert, mit Isopropanol gewaschen und 15 Stunden bei 100 °C (80 mbar) getrocknet. Dabei wurden 29,8 g eines braunen Feststoffs erhalten.
c) Carbonisierung der Kohlenstoffvorstufe 29,8 g des in Beispiel 1b erhaltenen Produkts wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit N₂/H₂ als Inertgas carbonisiert: Heizrate 10 °C/min, Temperatur 1000 °C, Haltedauer 180 min, N₂/H₂-Flussrate 360 ml/min. Nach dem Abkühlen wurden 19,4 g eines schwarzen Pulvers erhalten.
d) Beschichten des Produkt aus Beispiel 1c mit der Kohlenstoffvorstufe für die Schale 19,4 g des Produkts aus Beispiel 1c wurden zusammen mit 3,9 g Pech (hochschmelzend; Erweichungspunkt 235 °C) in 350 ml p-Xylol mittels Ultraschall (Hielscher UIS250V; Amplitude 80%, Cycle: 0,75; Dauer: 30 min) dispergiert. Die Suspension wurde 90 min unter Rückfluss gerührt. Nach dem Abkühlen wurde das Lösungsmittel unter vermindertem Druck am Rotationsverdampfer entfernt.
e) Carbonisierung der Kohlenstoffvorstufe für die Schale 22,6 g des in Beispiel 1d erhaltenen Produkts wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit N₂/H₂ als Intertgas carbonisiert: Zuerst Heizrate 10 °C/min, Temperatur 300 °C; danach direkt weiter mit Heizrate 5 °C/min, Temperatur 550 °C; danach direkt weiter mit 10 °C/min, 1000 °C, Haltedauer 3 h, N₂/H₂-Flussrate 360 ml/min. Nach dem Abkühlen wurden 20,8 g eines schwarzen Pulvers erhalten, welches mittels Nasssiebung von Überkorn befreit wurde. Es wurden 8,8 g poröse Kern-Schale-Kompositpartikel mit dichter äußerer C-Beschichtung und mit einer Partikelgröße von d₉₉ < 20 µm erhalten.

Elementare Zusammensetzung: Si 60,0 Gew-%; C 35,3 Gew.-%; O 1,22 Gew-%; N 0,81 Gew-%;
Partikelgrößenverteilung: Monomodal; d10: 7,7 µm, d50: 12,3 µm, d90: 18,6 µm; (d90-d10)/d50 = 0,9;
spezifische Oberfläche (BET) = 0,86 m²/g;
Si-Dichtigkeit: 100 % (flüssigkeitsdicht);
Rohdichte: 1,90 g/cm³;
Reindichte: 2,08 g/cm³;
nicht zugängliches Porenvolumen: 0,05 cm³/g;
Theoretische, spezifische Kapazität: 2547 mAh/g.

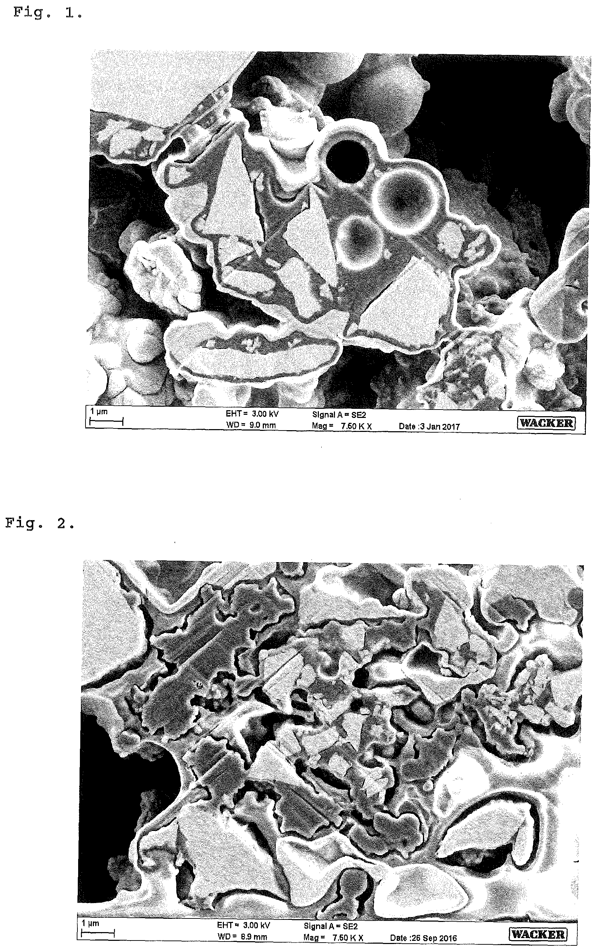

Fig. 1 zeigt einen REM-Schnitt durch einen Kern-Schale-Kompositpartikel aus Beispiel 1e (7.500-fache Vergrößerung). Die Silicium-Partikel und Makroporenräume sind in die Kohlenstoffmatrix eingebettet. Letztere können die Silicium-Volumenausdehnung beim Lithiieren entsprechender Lithium-Ionen-Batterien abpuffern.

### Beispiel 2:

Kern-Schale-Kompositpartikel (unporöse Schale, Kern mit lokaler Porosität, Si-Partikel mit d₅₀ = 4,5 µm):
a) Beschichten des Si mit dem Opfermaterial
   15,0 g Silicium-Pulver B (d₅₀ = 4,5 µm) wurden in 90 mL Wasser vorgelegt und mittels Ultraschall (Hielscher UIS250V; Amplitude 80%, Cycle: 0,75; Dauer: 45 min) dispergiert. Anschließend wurde die erhaltene Suspension bei 50 °C zu einer ebenso 50 °C warmen Lösung aus 5,2 g Melamin und 7,4 g Formaldehyd (20,0 g einer 37%-igen Lösung in Wasser) gegeben und eine Stunde bei 55°C gerührt. Danach wurden 300 mL verdünnte Salpetersäure (pH 3,5) zugegeben und 60 Minuten bei 100°C gerührt.
b) Beschichten des Produkts aus Beispiel 2a mit Kohlenstoffvorstufe
   Dem Produkt aus Beispiel 2a wurden 8,2 g Resorcin und 6,7 g Formaldehyd (18,1 g einer 37%-igen Lösung in Wasser) unter Rühren zugegeben. Anschließend wurde der pH durch Zugabe von 2 mL Ammoniak (32%) auf pH 7 eingestellt und das Gemisch für 4 h auf 70 °C erhitzt. Nach dem Abkühlen wurde die Suspension über einen Rundfilter (Partikelretention 20 µm) filtriert, mit Isopropanol gewaschen und 15 Stunden bei 100 °C (80 mbar) getrocknet. Dabei wurden 32,8 g eines braunen Feststoffs erhalten.
c) Carbonisierung der Kohlenstoffvorstufe
   32,5 g des in Beispiel 2b erhaltenen Produkts wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit N₂/H₂ als Intertgas carbonisiert: Heizrate 10 °C/min, Temperatur 1000 °C, Haltedauer 180 min, N₂/H₂-Flussrate 360 ml/min. Nach dem Abkühlen wurden 21 g eines schwarzen Pulvers erhalten.
d) Beschichten des Produkt aus Beispiel 2c mit der Kohlenstoffvorstufe für die Schale
   20,2 g des Produkts aus Beispiel 2c wurden zusammen mit 4,4 g Pech (hochschmelzend; Erweichungspunkt 235 °C) in 350 ml p-Xylol mittels Ultraschall (Hielscher UIS250V; Amplitude 80%, Cycle: 0,75; Dauer: 30 min) dispergiert. Die Suspension wurde 90 min unter Rückfluss gerührt. Nach dem Abkühlen wurde das Lösungsmittel unter vermindertem Druck am Rotationsverdampfer entfernt.
e) Carbonisierungder Kohlenstoffvorstufe für die Schale 21,2 g des in Beispiel 2d erhaltenen Produkts wurden in ein
   Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit N₂/H₂ als Intertgas carbonisiert: Zuerst Heizrate 10 °C/min, Temperatur 300 °C; danach direkt weiter mit Heizrate 5 °C/min, Temperatur 550 °C; danach direkt weiter mit 10 °C/min, 1000 °C, Haltedauer 3 h, N₂/H₂-Flussrate 360 ml/min. Nach dem Abkühlen wurden 19,2 g eines schwarzen Pulvers erhalten, welches mittels Nasssiebung von Überkorn befreit wurde. Es wurden 16,6 g poröse Kern-Schale-Kompositpartikel mit dichter äußerer C-Beschichtung und mit einer Partikelgröße von d₉₉ < 20 µm erhalten.

Elementare Zusammensetzung: Si 52 Gew-%; C 43,2 Gew.-%; O 0,78 Gew-%; N 2,89 Gew-%;
Partikelgrößenverteilung: Monomodal; d10: 5,4 µm, d50: 8,4 µm, d90: 13,0 µm; (d90-d10)/d50 = 0,9;
spezifische Oberfläche (BET) = 2,7 m²/g;
Rohdichte: 1,99 g/cm³;
Reindichte: 2,29 g/cm³;
nicht zugängliches Porenvolumen: 0,07 cm³/g;
Theoretische, spezifische Kapazität: 2247 mAh/g.

Fig. 2 zeigt einen REM-Schnitt durch Kern-Schale-Kompositpartikel aus Beispiel 3e (7.500-fache Vergrößerung). Die Silicium-Partikel sind in lokale Makroporenräume eingebettet, welche die Silicium-Volumenausdehnung beim Lithiieren entsprechender Lithium-Ionen-Batterien abpuffern können.

### Vergleichsbeispiel 3:

Kern-Schale-Kompositpartikel (unporöse Schale, Kern mit lokaler Porosität, Si-Partikel mit d₅₀ = 800 nm) :
a) Beschichten des Si mit dem Opfermaterial
   9,4 g Silicium-Pulver A (d₅₀ = 800 nm) wurden unter Zusatz einiger Tropfen Ethanol in 90 mL Wasser vorgelegt und mittels Ultraschall (Hielscher UIS250V; Amplitude 80%, Cycle: 0,75; Dauer: 45 min) dispergiert. Anschließend wurde die erhaltene Suspension bei 50 °C zu einer ebenso 50 °C warmen Lösung aus 5,2 g Melamin und 7,4 g Formaldehyd (20,0 g einer 37%-igen Lösung in Wasser) gegeben und eine Stunde bei 50°C gerührt. Danach wurden 300 mL verdünnte Salpetersäure (pH 3,5) zugegeben und 50 Minuten bei 90°C gerührt. Nach dem Abkühlen wurde die Suspension über einen Rundfilter (Partikelretention 20 µm) filtriert, mit Ethanol gewaschen und 15 Stunden bei 100 °C (80 mbar) getrocknet. Dabei wurden 16,5 g eines braunen Feststoffs erhalten.
b) Beschichten des Produkts aus Beispiel 3a mit Kohlenstoffvorstufe
   15,0 g des Produkts aus Beispiel 3a wurden in 350 mL Isopropanol mittels Ultraschall (Hielscher UIS250V; Amplitude 80%, Cycle: 0,75; Dauer: 30 min) dispergiert und 16,1 g Resorcin bzw. 13,2 g Formaldehyd (35,6 g einer 37%-igen Lösung in Wasser) unter Rühren zugegeben. Anschließend wurde der pH durch Zugabe von 5 mL Ammoniak (32%) auf pH 7 eingestellt und das Gemisch für 4h auf 90 °C erhitzt. Nach dem Abkühlen wurde die Suspension über einen Rundfilter (Partikelretention 20 µm) filtriert, mit Isopropanol gewaschen und 15 Stunden bei 100 °C (80 mbar) getrocknet. Dabei wurden 33,4 g eines braunen Feststoffs erhalten.
c) Carbonisierung der Kohlenstoffvorstufe
   33,6 g des in Beispiel 3b erhaltenen Produkts wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit N₂/H₂ als Inertgas carbonisiert: Heizrate 10 °C/min, Temperatur 1000 °C, Haltedauer 180 min, N₂/H₂-Flussrate 200 ml/min. Nach dem Abkühlen wurden 18,9 g eines schwarzen Pulvers erhalten.
d) Beschichten des Produkt aus Beispiel 3c mit der Kohlenstoffvorstufe für die Schale
   18,7 g des Produkts aus Beispiel 3c wurden zusammen mit 3,7g Pech (hochschmelzend; Erweichungspunkt 235 °C) in 350 ml p-Xylol mittels Ultraschall (Hielscher UIS250V; Amplitude 80%, Cycle: 0,75; Dauer: 30 min) dispergiert. Die Suspension wurde 90 min unter Rückfluss gerührt. Nach dem Abkühlen wurde das Lösungsmittel unter vermindertem Druck am Rotationsverdampfer entfernt.
e) Carbonisierung der Kohlenstoffvorstufe für die Schale 18,7 g des in Beispiel 3d erhaltenen Produkts wurden in ein
   Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit N₂/H₂ als Inertgas carbonisiert: Zuerst Heizrate 10 °C/min, Temperatur 300 °C; danach direkt weiter mit Heizrate 5 °C/min, Temperatur 550 °C; danach direkt weiter mit 10 °C/min, 1000 °C, Haltedauer 3 h, N₂/H₂-Flussrate 200 ml/min. Nach dem Abkühlen wurden 20,0 g eines schwarzen Pulvers erhalten, welches mittels Nasssiebung von Überkorn befreit wurde. Es wurden 15,4 g poröse Kern-Schale-Kompositpartikel mit dichter äußerer C-Beschichtung und mit einer Partikelgröße von d₉₉ < 20 µm erhalten.

Elementare Zusammensetzung: Si 33,7 Gew-%; C 58,9 Gew.-%; O 4,86 Gew-%; N 1,18 Gew-%;
Partikelgrößenverteilung: Monomodal; d10: 11,0 µm, d50: 16,6 µm, d90: 23,8 µm; (d90-d10)/d50 = 0,8;
spezifische Oberfläche (BET) = 5,8 m²/g;
Si-Dichtigkeit: 98% (flüssigkeitsdicht);
Rohdichte: 1,83 g/cm³;
Reindichte: 2,12 g/cm³;
nicht zugängliches Porenvolumen: 0,08 cm³/g;
Theoretische, spezifische Kapazität: 1356 mAh/g.

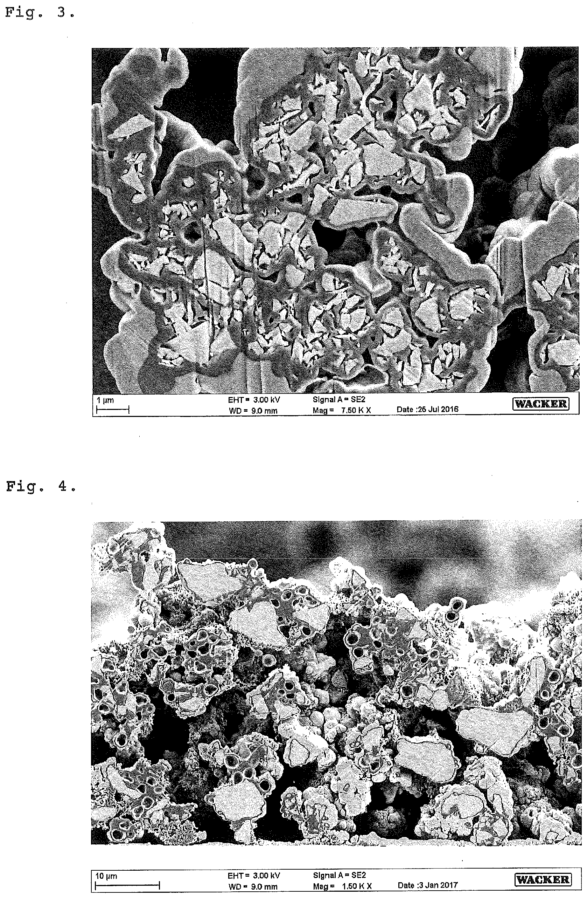

Fig. 3 zeigt einen REM-Schnitt durch einen Kern-Schale-Kompositpartikel aus Vergleichsbeispiel 3e (7.500-fache Vergrößerung). Die Silicium-Partikel sind in lokale Makroporenräume eingebettet, welche die Silicium-Volumenausdehnung beim Lithiieren entsprechender Lithium-Ionen-Batterien abpuffern können.

### Beispiel 4:

Elektrochemische Charakterisierung der Kern-Schale-Kompositpartikel:
a) Herstellung einer Elektrodenschicht mit dem Kern-Schale-Komposit-Partikel aus Beispiel 1-3:
0,17 g Leitruß (Imerys, Super C65), 3,0 g Wasser und 6,05 g einer 1,4 Gew.% Lösung von Natrium-Carboxymethylcellulose (Daicel, Grade 1380) in Wasser wurden mittels Dissolver bei einer Umlaufgeschwindigkeit von 4,5 m/s für 5 min und von 17 m/s für 30 min unter Kühlung bei 20°C dispergiert. Anschließend erfolgte die Zugabe von 0,21 g des SBR-Binders (Styrol-Butadien-Copolymer, 40% in H₂O), woraufhin erneut bei einer Umlaufgeschwindigkeit von 17 m/s für 30 min dispergiert wurde. Anschließend wurden 3,0 g der Kern-Schale-Kompositpartikel zugegeben, bei einer Umlaufgeschwindigkeit von 4,5 m/s für 5 min eingerührt und dann weitere 30 min bei einer Umlaufgeschwindigkeit von 12 m/s dispergiert. Nach Entgasen wurde die Dispersion mittels eines Filmziehrahmens mit definierter Spalthöhe (Erichsen, Modell 360) auf eine Kupferfolie (Schlenk Metallfolien, SE-Cu58) mit Dicke von 0,030 mm aufgebracht. Die so hergestellte Elektrodenbeschichtung wurde anschließend 60 min bei 80°C und 1 bar Luftdruck getrocknet.
Die theoretische, spezifische Elektrodenkapazität der erhaltenen Elektrode ergibt sich aus den theoretischen, spezifischen Kapazitäten der Elektrodenkomponenten, die entsprechend ihrem Gewichtsanteil in der Elektrode addiert werden. Im vorliegenden Fall trägt nur das Kern-Schale-Kompositpartikel zur spezifischen Elektrodenkapazität bei. Leitruß, Na-Carboxymethylcellulose und Binder weisen keine spezifische Kapazität auf. Die theoretischen, spezifischen Kapazitäten sind für die unterschiedlichen Elektroden in Tabelle 1 aufgelistet.

**Tabelle 1: theoretische, spezifische Kapazität der Elektroden:**

| | Kern-Schale-Kompositpartikel | | Elektrode |
|---|---|---|---|
| | theoretische, spezifische Kapazität | Anteil in der Elektrode | theoretische, spezifische Kapazität |
| Beispiel 1 | 2547 mAh/g | 90 Gew. -% | 2292 mAh/g |
| Beispiel 2 | 2247 mAh/g | 90 Gew. -% | 2022 mAh/g |
| Beispiel 3 | 1356 mAh/g | 90 Gew. -% | 1220 mAh/g |

b) Kapazitätsbestimmung zur Einstellung des Anoden zu Kathoden-Verhältnisses (A/K):
Zum Einstellen des gewünschten Anoden zu Kathoden-Verhältnisses in der Vollzellenanordnung wurden zunächst die jeweiligen Elektrodenbeschichtungen in T-Zellen (Swagelok T-Verschraubung 316L Stainless Steel; 1/2" Rohrverschraubung; PFA-Dichtung) als Arbeitselektrode (Dm = 12 mm) ausgestanzt gegen metallisches Lithium (Dm = 12 mm; Albemarle; Dicke 500 µm; Batterygrade) als Gegenelektrode (Halbzelle) assembliert.
Ein mit 120 µ1 Elektrolyt getränktes, Glasfaser-Filterpapier (Whatman, GD Type D) diente als Separator (Dm = 13 mm). Der verwendete Elektrolyt bestand aus einer 1,0-molaren Lösung von Lithiumhexafluorophosphat (LiPF6) in einem 3:7 (v/v) Gemisch von Ethylencarbonat (EC) und Diethylcarbonat (DEC), welche mit 2 Gew.-% Vinylencarbonat (VC) versetzt war.
Der Bau der Zellen erfolgte in einer Glovebox (< 1 ppm H₂O, O₂; MBraun), der Wassergehalt in der Trockenmasse aller verwendeten Komponenten lag unterhalb von 20 ppm.
Die Kapazitätsmessung wurde an einem BaSyTec CTS Prüfstand bei 20°C durchgeführt.
Die Lithiierung der Anode erfolgte im cc/cv-Verfahren (constant current / constant voltage) mit konstantem Strom bei einer Rate von C/25 im ersten Zyklus und von C/2 in zwei darauffolgenden Zyklen. Das Potentialfenster für die Lithiierung/Delithiierung wurde zwischen 5 mV und 1,5 V bzw. 0,8 V vs. Lithium für C/25 bzw. C/2 festgelegt. Nach Erreichen der Spannungsuntergrenze von 5 mV versus Lithium wurde mit konstanter Spannung bis zum Unterschreiten eines Stroms von C/100 weiter geladen. Das Entladen der Zelle erfolgte im cc-Verfahren (constant current) mit konstantem Strom von C/25 im ersten Zyklus und von C/2 in beiden darauffolgenden Zyklen bis zum Erreichen der jeweiligen Spannungsobergrenze.
Die Delithiierungskapazität im zweiten Entladezyklus wird als nutzbare Lithium-Kapazität der Elektrode verwendet.
Anhand variierender Beschichtungsgewichte wurde die gewünschte Kapazität der Anodenbeschichtung eingestellt und so in Kombination mit der Kathodenbeschichtung das gewünschte Anoden zu Kathoden-Verhältnis erhalten.

c) Bau der Li-Ionen-Zellen und elektrochemische Charakterisierung
Die elektrochemischen Untersuchungen von Vollzellen wurden in Knopfzellen (Typ CR2032, Hohsen Corp.) in einer 2-ElektrodenAnordnung durchgeführt. Die beschriebene Elektrodenbeschichtung wurde als Gegenelektrode bzw. negative Elektrode (Dm = 15 mm) ausgestanzt, eine Beschichtung auf Basis von Lithium-Nickel-Mangan-Kobaltoxid 6:2:2 mit Gehalt von 94,0 Gew.% und mittlerem Flächengewicht von 14,82 mg/cm² als Arbeitselektrode bzw. positive Elektrode (Dm = 15 mm) verwendet. Ein mit 120 µl Elektrolyt getränktes, Glasfaser-Filterpapier (Whatman, GD Type D) diente als Separator (Dm = 16 mm). Der verwendete Elektrolyt bestand aus einer 1,0-molaren Lösung von Lithiumhexafluorophosphat (LiPF₆) in einem 3:7 (v/v) Gemisch von Ethylencarbonat (EC) und Diethylcarbonat (DEC), welche mit 2 Gew.-% Vinylencarbonat (VC) versetzt war. Der Bau der Zellen erfolgte in einer Glovebox (< 1 ppm H₂O, O₂; MBraun), der Wassergehalt in der Trockenmasse aller verwendeten Komponenten lag unterhalb von 20 ppm.

Die elektrochemische Testung wurde bei 20°C durchgeführt. Das Laden der Zelle erfolgte im cc/cv-Verfahren (constant current / constant voltage) an einem BaSyTec CTS Prüfstand mit konstantem Strom von 5 mA/g (entspricht C/25) im ersten Zyklus und von 60 mA/g (entspricht C/2) in den darauffolgenden Zyklen und nach Erreichen der Spannungsgrenze von 4,2 V mit konstanter Spannung bis Unterschreiten eines Stroms von 1,2 mA/g (entspricht C/100) bzw. 15 mA/g (entspricht C/8). Das Entladen der Zelle erfolgte im cc-Verfahren (constant current) mit konstantem Strom von 5 mA/g (entspricht C/25) im ersten Zyklus und von 60 mA/g (entspricht C/2) in den darauffolgenden Zyklen bis Erreichen der Spannungsgrenze von 3,0 V. Der gewählte spezifische Strom bezog sich auf das Gewicht der Beschichtung der positiven Elektrode.

Abhängig von der Rezeptierung entspricht das Anoden zu Kathoden-Verhältnis (Zellbalancing) der Lithium-Ionen-Batterie einer Voll- oder Teil-Lithiierung der Anode. Die Ergebnisse der Austestung sind in Tabelle 2 zusammengefasst.

**Tabelle 2: Zyklenzahl mit ≥ 80% Kapazitätserhalt (Zyklus 80%):**

| | Zyklus 80% | | | |
|---|---|---|---|---|
| Beispiel 2 | A/K* = 1,1 | A/K* = 1,3 | A/K* = 2,0 | A/K* = 2,9 |
| Vergleichsbeispiel 3 | --- | 64 | --- | 96 |

| | | | | |
|---|---|---|---|---|
| *: Anoden zu Kathoden-Verhältnis | | | | |

Die erfindungsgemäßen Kern-Schale-Kompositpartikel auf Basis von Si-Partikeln mit einem erfindungsgemäßen Partikeldurchmesser d₅₀ (Beispiel 2) weisen ein signifikant stabileres Zyklenverhalten auf als die Kern-Schale-Kompositpartikel auf Basis von Si-Partikeln mit einem Partikeldurchmesser d₅₀ < 1µm (Vergleichsbeispiel 3).

Ferner steigt die Zyklenstabilität erheblich an mit zunehmendem A/K-Verhältnis und damit geringerer Lithiierung des Kern-Schale-Kompositpartikels.

### Beispiel 5:

Mechanische Stabilität der Kern-Schale-Kompositpartikel:
Die Kern-Schale-Kompositpartikel aus Beispiel 1e wurden wie in Beispiel 4a beschrieben zu einer Elektrode verarbeitet. Unter Verwendung einer Spaltbreite des Filmziehrahmens von 100 µm konnte bei einer Beladung von 1,79 mg/cm² eine Trockenfilmdicke von 34 µm erreicht werden. Dies entspricht einer Elektrodendichte von 0,53 g/cm³.

Mittels einer hydraulischen Tablettenpresse (Fa. Specac) wurden Elektrodenstanzlinge (Ø 15 mm) in drei aufeinanderfolgenden Kraftstufen (9kN --> 18kN --> 35kN) verdichtet. Im Mittel dreier Messungen konnte eine resultierende Elektrodendichte von 1,12 g/cm³ erhalten werden.

Die Verdichtung wird auch in den, in Fig. 4 (unverdichtet) und Fig. 5 (verdichtet) gezeigten REM-Schnitten deutlich. Auch nach der Verdichtung der Elektrode (Fig. 5) sind die globalen Poren in der Elektrodenstruktur deutlich zu erkennen, was auf eine hohe Scher- und Druckstabilität der erfindungsgemäßen Kern-Schale-Kompositpartikel schließen lässt.

## Patentansprüche

1. Kern-Schale-Kompositpartikel,
deren Kern eine Siliciumpartikel enthaltende, poröse, Kohlenstoff-basierte Matrix ist, die erhältlich ist durch Carbonisieren von einem oder mehrene Kohlenstoff-Vorstufen, und
deren Schale unporös ist und durch Carbonisierung von einem oder mehreren Kohlenstoff-Precursoren erhältlich ist, wobei unporöse Schale bedeutet, dass etwaige in der Schale enthaltene Poren < 10 nm sind, bestimmt aus der Porengrößenverteilung nach BJH mittels Gasadsorption gemäß DIN 66134,
wobei die Siliciumpartikel durchschnittliche Partikelgrößen d₅₀ von 1,5 bis 15 µm haben,
wobei die durchschnittlichen Partikelgrößen d₅₀ der Siliciumpartikel nach ISO 13320 mittels statischer Laserstreuung unter Anwendung des Mie-Modells mit dem Messgerät Horiba LA 950 mit Ethanol als Dispergiermedium für die Siliciumpartikel bestimmt werden, und
der Kern der Kern-Schale-Kompositpartikel ≤ 1 Gew.-% an Leitadditiven enthält ausgewählt aus Graphit, Ruß, Carbon Nanotubes, Fullerene und Graphen, bezogen auf das Gesamtgewicht der Kern-Schale-Kompositpartikel.

2. Kern-Schale-Kompositpartikel gemäß Anspruch 1, **dadurch gekennzeichnet, dass** die Matrix auf Kohlenstoff basiert, der erhältlich ist durch Carbonisieren von einer oder mehreren Kohlenstoff-Vorstufen ausgewählt aus der Gruppe umfassend Resorcin-Formaldehyd-Harz, Phenol-Formaldehyd-Harz, Lignin und Polyacrylnitril.

3. Kern-Schale-Kompositpartikel gemäß Anspruch 1 oder 2, **dadurch gekennzeichnet, dass** ein oder mehrere Poren der Matrix Siliciumpartikel enthalten und
die Siliciumpartikel enthaltenden Poren erhältlich sind, indem Siliciumpartikel zunächst mit einem oder mehreren Opfermaterialien beschichtet werden und die so erhaltenen Produkte mit einer oder mehreren Kohlenstoff-Vorstufen beschichtet werden und die Beschichtung basierend auf den Opfermaterialien zu einem späteren Zeitpunkt wieder entfernt wird, wobei die Beschichtung basierend auf den Kohlenstoff-Vorstufen vor oder während des Entfernens der Opfermaterialien in eine Matrix basierend auf Kohlenstoff überführt wird.

4. Kern-Schale-Kompositpartikel gemäß Anspruch 3, **dadurch gekennzeichnet, dass** die Opfermaterialien anorganischer oder organischer Natur sind,
wobei anorganische Opfermaterialien Oxide, Carbonate, Carbide, Nitride oder Sulfide der Elemente Silicium, Magnesium, Calcium, Zinn, Zink, Titan oder Nickel, oder Silicate der Elemente Magnesium, Calcium, Zinn, Zink, Titan oder Nickel umfassen und
organische Opfermaterialien ausgewählt werden aus der Gruppe umfassend Polyethylen, Polypropylen, Polystyrol, Polybutadien, Poly-tert-Butoxystyrol, Polyvinylchlorid, Polyvinylacetat, Polymethacrylmethacrylat, Polyacrylsäure, Polymethacrylat, Polyvinylstearat Polyvinyllaurat, Polyvinylalkohol, Alkylenglycole, Polyalkylenoxide, Gamma-Butyrolacton, Propylencarbonat, Polysaccharide, Melaminharze und Polyurethane.

5. Kern-Schale-Kompositpartikel gemäß einem oder mehreren der Ansprüche 1 bis 4, **dadurch gekennzeichnet, dass** die Matrix Poren mit einem mittleren Durchmesser von 50 nm bis 22 µm enthält,
wobei die mittleren Durchmesser der Poren mittels Raster-Elektronen-Mikroskopie bestimmt werden und der mittlere Durchmesser als Medianwert definiert ist.

6. Kern-Schale-Kompositpartikel gemäß einem oder mehreren der Ansprüche 1 bis 5, **dadurch gekennzeichnet, dass** die Schale erhältlich ist durch Carbonisierung von einem oder mehreren Kohlenstoff-Precursoren ausgewählt aus der Gruppe umfassend Teere, Peche, Polyacrylnitril und Kohlenwasserstoffe mit 1 bis 20 Kohlenstoffatomen.

7. Kern-Schale-Kompositpartikel gemäß einem oder mehreren der Ansprüche 1 bis 6, **dadurch gekennzeichnet, dass** etwaige in der Schale enthaltene Poren ≤ 5 nm sind, bestimmt aus derPorengrößenverteilung nach BJH mittels Gasadsorption gemäß DIN 66134.

8. Verfahren zur Herstellung von Kern-Schale-Kompositpartikeln gemäß einem oder mehreren der Ansprüche 1 bis 7 durch
1) a) Beschichten von Siliciumpartikeln, die durchschnittliche Partikelgrößen d₅₀ von 1,5 bis 15 µm haben, mit einem oder mehreren Opfermaterialien und/oder b) Mischen von Siliciumpartikeln, die durchschnittliche Partikelgrößen d₅₀ von 1,5 bis 15 µm haben, mit einem oder mehreren Opfermaterialien,
wobei die durchschnittlichen Partikelgrößen d₅₀ der Siliciumpartikel nach ISO 13320 mittels statischer Laserstreuung unter Anwendung des Mie-Modells mit dem Messgerät Horiba LA 950 mit Ethanol als Dispergiermedium für die Siliciumpartikel bestimmt werden,
2) Beschichten des Produkts aus Stufe 1) mit einem oder mehreren Kohlenstoff-Vorstufen,
3) Carbonisieren des Produkts aus Stufe 2),
wobei die Opfermaterialien in dieser Carbonisierungsstufe
oder in einer weiteren Stufe 4) zersetzt und freigesetzt werden unter Bildung eines porösen Komposits,
5) Beschichten des so erhaltenen porösen Komposits mit einem oder mehreren Kohlenstoff-Precursoren für die Schale und
6) Carbonisieren des Produkts aus Stufe 5).

9. Lithium-Ionen-Batterien umfassend eine Kathode, eine Anode, einen Separator und einen Elektrolyt, **dadurch gekennzeichnet, dass** die Anode auf einem Anodenmaterial basiert, das ein oder mehrere Kern-Schale-Kompositpartikel gemäß einem oder mehreren der Ansprüche 1 bis 7 enthält.

10. Lithium-Ionen-Batterien gemäß Anspruch 9, **dadurch gekennzeichnet, dass** das Anodenmaterial in der vollständig geladenen Lithium-Ionen-Batterie nur teilweise lithiiert ist.

11. Lithium-Ionen-Batterien gemäß Anspruch 10, **dadurch gekennzeichnet, dass** das Verhältnis der Lithium-Kapazität der Anode zur Lithium-Kapazität der Kathode ≥ 1,15 ist.

12. Lithium-Ionen-Batterien gemäß Anspruch 10 oder 11, **dadurch gekennzeichnet, dass** die Anode in der vollständig geladenen Lithium-Ionen-Batterie mit 800 bis 1500 mAh/g beladen ist, bezogen auf die Masse der Anode.

13. Lithium-Ionen-Batterien gemäß einem oder mehreren der Ansprüche 10 bis 12, **dadurch gekennzeichnet, dass** im vollständig geladenen Zustand der Lithium-Ionen-Batterie das Verhältnis der Lithiumatome zu den Siliciumatomen im Anodenmaterial ≤ 4,0 beträgt.

14. Lithium-Ionen-Batterien gemäß einem oder mehreren der Ansprüche 10 bis 13, **dadurch gekennzeichnet, dass** die Kapazität des Siliciums des Anodenmaterials der Lithium-Ionen-Batterie zu ≤ 80% genutzt wird, bezogen auf die maximale Kapazität von 4200 mAh pro Gramm Silicium.

## Claims

1. Core-shell composite particles,
the core of which is a porous, carbon-based matrix containing silicon particles, obtainable by carbonization of one or more carbon precursors, and the shell of which is nonporous and is obtainable by carbonization of one or more carbon precursors, "nonporous shell" meaning that any pores present in the shell are < 10 nm, determined from the pore size distribution by the BJH method by means of gas adsorption in accordance with DIN 66134,
where the silicon particles have average sizes d₅₀ of from 1.5 to 15 µm,
where the average particle sizes d₅₀ of the silicon particles are determined in accordance with ISO 13320 by means of static laser light scattering using the Mie model and the measuring instrument Horiba LA 950 using ethanol as dispersing medium for the silicon particles, and
where the core of the core-shell composite particles contains ≤ 1% by weight of conductive additives selected from graphite, carbon black, carbon nanotubes, fullerenes and graphene, based on the total weight of the core-shell composite particles.

2. Core-shell composite particles according to Claim 1, **characterized in that** the matrix is based on carbon which is obtainable by carbonization of one or more carbon precursors selected from the group consisting of resorcinol-formaldehyde resin, phenolformaldehyde resin, lignin and polyacrylonitrile.

3. Core-shell composite particles according to Claim 1 or 2, **characterized in that** one or more pores of the matrix contain silicon particles and
the pores which contain silicon particles are obtainable by silicon particles firstly being coated with one or more sacrificial materials and the resulting products being coated with one or more carbon precursors and the coating based on the sacrificial materials being removed again at a later point in time, with the coating based on the carbon precursors being converted into a matrix based on carbon before or during removal of the sacrificial materials.

4. Core-shell composite particles according to Claim 3, **characterized in that** the sacrificial materials are inorganic or organic in nature,
where inorganic sacrificial materials comprise oxides, carbonates, carbides, nitrides or sulfides of the elements silicon, magnesium, calcium, tin, zinc, titanium or nickel, or silicates of the elements magnesium, calcium, tin, zinc, titanium or nickel
and
organic sacrificial materials are selected from the group consisting of polyethylene, polypropylene, polystyrene, polybutadiene, poly-tert-butoxystyrene, polyvinyl chloride, polyvinyl acetate, polymethacryl methacrylate, polyacrylic acid, polymethacrylate, polyvinyl stearate, polyvinyl laurate, polyvinyl alcohol, alkylene glycols, polyalkylene oxides, gamma-butyrolactone, propylene carbonate, polysaccharides, melamine resins and polyurethanes.

5. Core-shell composite particles according to one or more of Claims 1 to 4, **characterized in that** the matrix contains pores having an average diameter of from 50 nm to 22 µm, where the average diameters of the pores are determined by means of scanning electron microscopy and the average diameter is defined as the median.

6. Core-shell composite particles according to one or more of Claims 1 to 5, **characterized in that** the shell is obtainable by carbonization of one or more carbon precursors selected from the group consisting of tars, pitches, polyacrylonitrile and hydrocarbons having from 1 to 20 carbon atoms.

7. Core-shell composite particles according to one or more of Claims 1 to 6, **characterized in that** any pores present in the shell are ≤ 5 nm, determined from the pore size distribution by the BJH method by means of gas adsorption in accordance with DIN 66134.

8. A method for the production of core-shell composite particles according to one or more of Claims 1 to 7 by
1)
a) coating of silicon particles which have average particle sizes d₅₀ of from 1.5 to 15 µm with one or more sacrificial materials and/or
b) mixing of silicon particles which have average particle sizes d₅₀ of from 1.5 to 15 µm with one or more sacrificial materials,
where the average particle sizes d₅₀ of the silicon particles are determined in accordance with ISO 13320 by means of static laser light scattering using the Mie model and the measuring instrument Horiba LA 950 using ethanol as dispersing medium for the silicon particles,
2) coating of the product from stage 1) with one or more carbon precursors,
3) carbonization of the product from stage 2), with the sacrificial materials being decomposed and liberated in this carbonization stage or in a further stage
4) to form a porous composite,
5) coating of the porous composite obtained in this way with one or more carbon precursors for the shell, and
6) carbonization of the product from stage 5).

9. Lithium ion batteries comprising a cathode, an anode, a separator and an electrolyte, **characterized in that** the anode is based on an anode material which comprises one or more core-shell composite particles according to one or more of Claims 1 to 7.

10. Lithium ion batteries according to Claim 9, **characterized in that** the anode material in the fully charged lithium ion battery is only partially lithiated.

11. Lithium ion batteries according to Claim 10, **characterized in that** the ratio of the lithium capacity of the anode to the lithium capacity of the cathode is ≥ 1.15.

12. Lithium ion batteries according to either of Claims 10 and 11, **characterized in that** the anode in the fully charged lithium ion battery is charged with from 800 to 1500 mAh/g, based on the mass of the anode.

13. Lithium ion batteries according to one or more of Claims 10 to 12, **characterized in that** the ratio of the lithium atoms to the silicon atoms in the anode material in the fully charged state of the lithium ion battery is ≤ 4.0.

14. Lithium ion batteries according to one or more of Claims 10 to 13, **characterized in that** the capacity of the silicon of the anode material of the lithium ion battery is utilized to an extent of ≤ 80%, based on the maximum capacity of 4200 mAh per gram of silicon.

## Revendications

1. Particules composites à noyau-enveloppe, dont le noyau est une matrice poreuse, à base de carbone, contenant des particules de silicium, laquelle matrice peut être obtenue par carbonisation d'un ou de plusieurs précurseurs carbonés, et dont l'enveloppe est non poreuse et peut être obtenue par carbonisation d'un ou de plusieurs précurseurs carbonés, l'expression enveloppe non poreuse signifiant que de quelconques pores contenus dans l'enveloppe présentent une dimension < 10 nm, déterminée à partir de la distribution des dimensions de pore selon BJH par adsorption gazeuse selon la norme DIN 66134, les particules de silicium présentant des grosseurs moyennes de particule d₅₀ de 1,5 à 15 µm, les grosseurs moyennes de particule d₅₀ des particules de silicium étant déterminées selon la norme ISO 13320 par diffraction de rayon laser au moyen du modèle Mie à l'aide de l'appareil de mesure Horiba LA 950 avec de l'éthanol comme milieu de dispersion pour les particules de silicium et le noyau des particules composites à noyau-enveloppe contenant ≤ 1% en poids d'additifs conducteurs choisis parmi le graphite, la suie, les nanotubes de carbone, les fullerènes et le graphène, par rapport au poids total des particules composites à noyau-enveloppe.

2. Particules composites à noyau-enveloppe selon la revendication 1, **caractérisées en ce que** la matrice est à base de carbone qui peut être obtenu par carbonisation d'un ou de plusieurs précurseurs carbonés choisis dans le groupe comprenant une résine de résorcinol-formaldéhyde, une résine de phénol-formaldéhyde, la lignine et le polyacrylonitrile.

3. Particules composites à noyau-enveloppe selon la revendication 1 ou 2, **caractérisées**
**en ce qu'**un ou plusieurs pores de la matrice contiennent des particules de silicium et les pores contenant des particules de silicium peuvent être obtenus **en ce que** des particules de silicium sont d'abord revêtues par un ou plusieurs matériaux sacrificiels et les produits ainsi obtenus sont revêtus par un ou plusieurs précurseurs carbonés et le revêtement à base des matériaux sacrificiels est de nouveau éliminé à un moment ultérieur, le revêtement à base des précurseurs carbonés étant transformé avant ou pendant l'élimination des matériaux sacrificiels en une matrice à base de carbone.

4. Particules composites à noyau-enveloppe selon la revendication 3, **caractérisées en ce que** les matériaux sacrificiels sont de nature inorganique ou organique, les matériaux sacrificiels inorganiques comprenant les oxydes, les carbonates, les carbures, les nitrures ou les sulfures des éléments silicium, magnésium, calcium, étain, zinc, titane ou nickel ou les silicates des éléments magnésium, calcium, étain, zinc, titane ou nickel et les matériaux sacrificiels organiques étant choisis dans le groupe comprenant le polyéthylène, le polypropylène, le polystyrène, le polybutadiène, le poly-tert-butoxystyrène, le poly(chlorure de vinyle), le poly(acétate de vinyle), le poly(méthacrylate de méthacryle), le poly(acide acrylique), le polyméthacrylate, le poly(stéarate de vinyle), le poly(laurate de vinyle), le poly(alcool vinylique), les alkylèneglycols, les poly(oxydes d'alkylène), la gamma-butyrolactone, le carbonate de propylène, les polysaccharides, les résines de mélamine et les polyuréthanes.

5. Particules composites à noyau-enveloppe selon l'une ou plusieurs des revendications 1 à 4, **caractérisées en ce que** la matrice contient des pores présentant un diamètre moyen de 50 nm à 22 µm, les diamètres moyens des pores étant déterminés par microscopie électronique à balayage et le diamètre moyen étant défini comme la valeur médiane.

6. Particules composites à noyau-enveloppe selon l'une ou plusieurs des revendications 1 à 5, **caractérisées en ce que** l'enveloppe peut être obtenue par carbonisation d'un ou de plusieurs précurseurs carbonés choisis dans le groupe comprenant les goudrons, les brais, le polyacrylonitrile et les hydrocarbures comprenant 1 à 20 atomes de carbone.

7. Particules composites à noyau-enveloppe selon l'une ou plusieurs des revendications 1 à 6, **caractérisées en ce que** de quelconques pores contenus dans l'enveloppe présentent une dimension ≤ 5 nm, déterminée à partir de la distribution des dimensions de pore selon BJH par adsorption gazeuse selon la norme DIN 66134.

8. Procédé pour la préparation de particules composites à noyau-enveloppe selon l'une ou plusieurs des revendications 1 à 7 par
1)
a) revêtement de particules silicium qui présentent des grosseurs moyennes de particule d₅₀ de 1,5 à 15 µm par un ou plusieurs matériaux sacrificiels et/ou
b) mélange de particules silicium qui présentent des grosseurs moyennes de particule d₅₀ de 1,5 à 15 µm avec un ou plusieurs matériaux sacrificiels,
les grosseurs moyennes de particule d₅₀ des particules de silicium étant déterminées selon la norme ISO 13320 par diffraction laser au moyen du modèle Mie à l'aide de l'appareil de mesure Horiba LA 950 avec de l'éthanol comme milieu de dispersion pour les particules de silicium,
2) revêtement du produit de l'étape 1) par un ou plusieurs précurseurs carbonés,
3) carbonisation du produit de l'étape 2), les matériaux sacrificiels étant décomposés dans cette étape de carbonisation ou dans une autre étape
4) et libérés avec formation d'un composite poreux,
5) revêtement du composite poreux ainsi obtenu par un ou plusieurs précurseurs carbonés pour l'enveloppe et
6) carbonisation du produit de l'étape 5).

9. Batteries lithium-ion, comprenant une cathode, une anode, un séparateur et un électrolyte, **caractérisées en ce que** l'anode est à base d'un matériau d'anode qui contient une ou plusieurs particules composites à noyau-enveloppe selon l'une ou plusieurs des revendications 1 à 7.

10. Batteries lithium-ion selon la revendication 9, **caractérisées en ce que** le matériau d'anode dans la batterie lithium-ion complètement chargée n'est que partiellement lithié.

11. Batteries lithium-ion selon la revendication 10, **caractérisées en ce que** le rapport de la capacité de lithium de l'anode à la capacité de lithium de la cathode est ≥ 1,15.

12. Batteries lithium-ion selon la revendication 10 ou 11, **caractérisées en ce que** l'anode dans la batterie lithium-ion complètement chargée est chargée par 800 à 1500 mAh/g, par rapport à la masse de l'anode.

13. Batteries lithium-ion selon l'une ou plusieurs des revendications 10 à 12, **caractérisées en ce que** dans l'état complètement chargé de la batterie lithium-ion, le rapport des atomes de lithium aux atomes de silicium dans le matériau d'anode est ≤ 4,0.

14. Batteries lithium-ion selon l'une ou plusieurs des revendications 10 à 13, **caractérisées en ce que** la capacité du silicium du matériau d'anode de la batterie lithium-ion est utilisée à ≤ 80%, par rapport à la capacité maximale de 4200 mAh par gramme de silicium.
